(19) Europäisches Patentamt
European Patent Office
Office européen des brevets

(11) **EP 4 191 203 A1**

(12) **EUROPEAN PATENT APPLICATION**
published in accordance with Art. 153(4) EPC

(43) Date of publication:
**07.06.2023 Bulletin 2023/23**

(21) Application number: **21849538.0**

(22) Date of filing: **02.07.2021**

(51) International Patent Classification (IPC):
***G01C 21/34*** (2006.01)        ***G08G 1/0968*** (2006.01)

(52) Cooperative Patent Classification (CPC):
**G01C 21/34; G05D 1/02; G08G 1/0968;
G08G 1/0969; G09B 29/00; G09B 29/10**

(86) International application number:
**PCT/JP2021/025066**

(87) International publication number:
**WO 2022/024663 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2020  JP 2020129409**

(71) Applicant: **OMRON Corporation
Kyoto 600-8530 (JP)**

(72) Inventor: **YONETANI, Ryo
Tokyo 113-0033 (JP)**

(74) Representative: **Horn Kleimann Waitzhofer
Patentanwälte PartG mbB
Ganghoferstraße 29a
80339 München (DE)**

(54) **MODEL GENERATION DEVICE, ROUTE RETRIEVAL DEVICE, MODEL GENERATION METHOD, AND MODEL GENERATION PROGRAM**

(57)    A model generation apparatus trains a search module on training data pairs through machine learning to find a path fitting a recommended path indicated by true information in response to receiving an input of a training map as an input map. In the machine learning, the model generation apparatus performs, in a phase of forward propagation, an extraction operation and a selection operation, and replaces, in a phase of backpropagation, the extraction operation and the selection operation with differentiable alternative operations and differentiates the alternative operations to compute approximate gradients corresponding to differentiation calculations for the extraction operation and the selection operation.

FIG. 5

**Description**

FIELD

The present invention relates to a model generation apparatus, a pathfinding apparatus, a model generation method, and a model generation program.

BACKGROUND

A pathfinding problem is to find a recommended path on a map (graph) from a start node to a goal node (goal). The recommended path is, for example, the shortest path. The pathfinding problem is solved by, for example, finding a recommended travel path for a movable body or a recommended motion path for a robotic device. Classical algorithms widely known to solve a pathfinding problem include Dijkstra's algorithm, best-first search, and the A* search algorithm.

A basic approach to finding a path with a minimum cost is described below.

(1) The search space includes a set V (V = {$V_1$, ..., $V_N$}) of N nodes (N is a natural number). One of the N nodes is a start (source) node ($v_s \in$ V), and another is a goal node ($v_g$ E V).

(2) A set O (O $\subset$ V) of candidate nodes to be examined whether the nodes are included in a recommended path and a set C (C $\subset$ V) of nodes that have been examined are prepared. Initially, the set O contains the start node $v_s$ alone (O = {$v_s$}), and the set C is empty.

(3) The procedures (A) and (B) below are iterated until the goal node $v_g$ is contained in the set O.

(A) One node v* (v* $\in$ O) with a minimum cost is selected from the set O, the selected node v* is add to the set C, and the node v* is removed from the set O.

(B) Nodes adjacent to (e.g., neighboring) the node v* (set $V_{SUCC} \subset$ V) are

extracted from the set V, and the extracted nodes are added to the set O.

(4) When the goal node $v_g$ is contained in the set O, the goal node $v_g$ is selected to end the search.

The cost function f(v) for selecting the node v* in (3)(A) described above can be typically written as Formula 1 below.

$$f(v) = a \cdot g(v, v_s) + b \cdot h(v, v_g) \tag{1}$$

where g(v, $v_s$) is the actual cost (e.g., actual travel distance) used to travel from the start node $v_s$ to a node v, h(v, $v_g$) is the estimated cost (e.g., linear distance) to be used to travel from the node v to the goal node $v_g$, and a and b are each a constant defining the degree by which the corresponding term is reflected in selecting the node. The cost corresponds to the degree by which the path is recommended (lower cost) or not recommended (higher cost) to include the node. The index for evaluating the degree of recommendation may be, for example, distance, time, expense, the degree of unsafety, the degree of congestion, or attractiveness. For the index being distance in one example, the shortest path is searched for with the above method.

When a = 1 and b = 0, the above search algorithm is Dijkstra's algorithm. Dijkstra's algorithm reliably finds an optimal recommended path with a minimum actual cost. However, Dijkstra's algorithm searches for a path with a minimum actual cost g exhaustively. The algorithm is thus inefficient and takes time for the search. When a = 0 and b = 1, the above search algorithm is best-first search. Best-first search preferentially searches for a node with a minimum cost to the goal node (in other words, the search continues toward the goal node) and is often more efficient than Dijkstra's algorithm. However, best-first search may not yield an optimal recommended path (in other words, a yielded path may not be an optimal path) due to, for example, obstacles between the start node and the goal node. When a = 1 and b = 1, the above search algorithm is the A* search algorithm. Although the A* search algorithm conducts search more efficiently than Dijkstra's algorithm and less efficiently than best-first search, the A* search algorithm reliably finds an optimal recommended path by appropriately designing an acceptable heuristic function (cost).

In other words, best-first search and the A* search algorithm can conduct search more efficiently than Dijkstra's algorithm. However, a map may include obstacles that obstruct the progress. Best-first search or the A* search algorithm is known to possibly have lower search efficiency depending on the form of the obstacles.

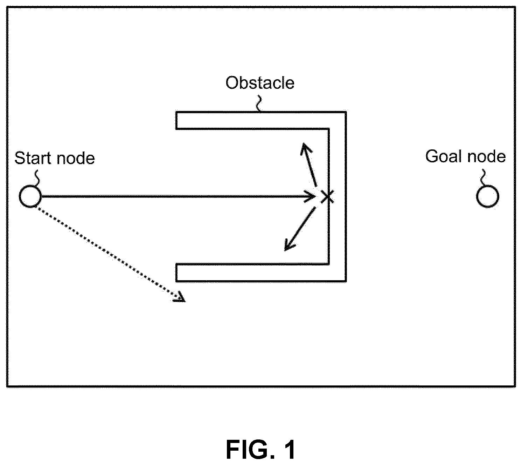

FIG. 1 schematically shows an example map including an obstacle that can reduce search efficiency. The map in FIG. 1 includes a square U-shaped obstacle between the start node and the goal node, with the recess of the obstacle facing the start node. When best-first search or the A* search algorithm is used to find a recommended path in the map, the search may enter a recess to be closer to the goal node from the start node. In this case, the search encounters an obstacle within the recess and then moves within and around the recess for a detour path, thus having lower search efficiency.

For the map in FIG. 1, the goal node cannot be reached during the search remaining within the recess. Any search algorithm can thus be inefficient during the search remaining within the recess. In this case, any search algorithm (including Dijkstra's algorithm) that avoids entering a recess (e.g., as with the dotted arrow in FIG. 1) is likely to improve the search efficiency. In other words, any search algorithm can improve search efficiency by avoiding searching areas on the map including an obstacle that obstructs the progress and reduces the search efficiency.

Non-Patent Literature 1 describes use of machine learning to adjust the parameters of heuristic functions for calculating costs with best-first search. The method described in Non-Patent Literature 1 trains the heuristic functions to yield high costs for areas that reduce search efficiency. The trained heuristic function can thus minimize searching such areas and improve search efficiency.

CITATION LIST

NON-PATENT LITERATURE

Non-Patent Literature 1: Mohak Bhardwaj; Sanjiban Choudhury; Sebastian Scherer, Learning Heuristic Search via Imitation. CoRL 2017, 271-280.

SUMMARY

TECHNICAL PROBLEM

The inventor of the present invention has noticed issues described below associated with the method described in, for example, Non-Patent Literature 1 that directly trains cost functions by machine learning. More specifically, a variety of obstacles other than an obstacle with a square U-shape can reduce search efficiency. To respond to such varying situations, the cost function may be trained on various training maps. However, directly training the cost function uses true information indicating the true values of the costs for all nodes included in each training map. Identifying the true values of the costs (in other words, preparing the true information) for all nodes in accordance with the search algorithm takes more time for more nodes included in the training maps, and thus involves much effort to generate a pathfinding module. Additionally, the method in Non-Patent Literature 1 uses best-first search, which can often fail to find a path with a minimum cost.

In response to the above issue, one aspect of the present invention is directed to a technique for improving the efficiency of pathfinding and reducing the effort in generating a search module.

SOLUTION TO PROBLEM

The technique according to one or more aspects of the present invention has the structure described below.

A model generation apparatus according to one aspect of the present invention includes a data obtainer that obtains a plurality of training data pairs each including a combination of a training map and true information indicating a recommended path in the training map, and a training unit that trains a search module through machine learning using the plurality of training data pairs. The search module includes a neural network that estimates a cost of each of a plurality of nodes in an input map, an extraction operation to extract, from the plurality of nodes in the input map, one or more candidate nodes adjacent to a path node, and a selection operation to select, based on an estimation result from the neural network, a next path node from the extracted one or more candidate nodes to minimize a sum of the costs for the plurality of nodes. The search module finds a path from a start node being a first path node to a goal node through the extraction operation and the selection operation being iterated until the goal node is selected as a path node. The machine learning includes training the search module on each of the plurality of training data pairs to find a path fitting the recommended path indicated by the true information in response to receiving an input of the training map as the input map. In the machine learning, the training unit performs, in a phase of forward propagation, the extraction operation and the selection operation, and replaces, in a phase of backpropagation, the extraction operation and the selection operation with differentiable alternative operations and differentiates the differentiable alternative operations to compute approximate gradients corresponding to differentiation calculations for the extraction operation and the selection operation.

In the structure, the search module (search model) includes a first calculation module that performs an operation to estimate the cost for each node and a second calculation module that performs an operation to find a path with a minimum sum of the costs for the plurality of nodes based on the estimated costs. The first calculation module includes a neural network. The second calculation module includes the operation to extract one or more candidate nodes adjacent to a path node and an operation to select the next path node from the extracted candidate nodes. When the first calculation module alone is trained through machine learning, a true cost value is to be prepared for each training map, increasing the effort in generating the search module as described above. In contrast, the above structure trains both the first calculation module and the second calculation module through machine learning. The structure allows preparing true information that indicates a recommended path, instead of preparing true cost values for each training map. This eliminates examining all nodes in the training map, allowing use of, for example, search results or records from known algorithms directly as recommended paths. The structure thus involves less work time for and the burden of preparing true information than identifying the true cost values of all nodes in the training map, reducing the effort in generating the search module. During the machine learning, the search module is trained to optimally find a recommended path. This allows the neural network to be indirectly trained on the recommended path indicated by true information to increase the costs of areas that reduce search efficiency. The use of cost estimation results from the trained neural network can improve the efficiency of pathfinding appropriately.

However, machine learning with the search module including the neural network involves backpropagating the gradient of the error between the pathfinding result obtained by a forward propagation operation and the true information successively from the output end. The backpropagation operation is performed when all operations that backpropagate the gradient of the error are differentiable. However, the operations with the second calculation module for pathfinding using the cost estimation results from the neural network (in other words, the operation to extract one or more candidate nodes and the operation to select the next path node from the extracted candidate nodes) are operations to extract an element that matches a condition from a set and is non-differentiable. Machine learning thus cannot be performed simply with the search module. In other words, although training the second calculation module through machine learning can allow use of the final result as true information and reduce the effort in generating the search module as described above, the machine learning with the second calculation module is difficult with known methods.

In response to this issue, the machine learning in the above structure includes performing, in the phase of forward propagation, the extraction operation and the selection operation without any additional operation and replacing, in the phase of backpropagation, the extraction operation and the selection operation with differentiable alternative operations and differentiating the resulting alternative operations to compute approximate gradients corresponding to differentiation calculations for the extraction operation and the selection operation. This allows the search module including the non-differentiable operations to be trained through machine learning appropriately. The structure can thus improve the efficiency of pathfinding, generate the trained search module (trained search model) appropriately, and reduce the effort in generating the search module.

In the model generation apparatus according to the above aspect, the selection operation may select, based on the estimation result from the neural network, the next path node from the extracted one or more candidate nodes to minimize the sum of the costs for the plurality of nodes using a predetermined search algorithm. This structure can reduce the effort in generating the search module that can implement the predetermined search algorithm. The use of a known search algorithm as the predetermined search algorithm can further reduce the effort in generating the search module.

In the model generation apparatus according to the above aspect, the predetermined search algorithm may be Dijkstra's algorithm, best-first search, or an A* search algorithm. This structure allows simple implementation of the search module, thus further reducing the effort in generating the search module. Each algorithm may include a variant algorithm in addition to the original algorithm.

In the model generation apparatus according to the above aspect, the training map may include a range in which a movable body is allowed to travel. The recommended path indicated by the true information may be a travel path recommended for the movable body. This structure can improve, for a search module generated for travel path planning of a movable body, the efficiency of pathfinding and reduce the effort in generating the search module.

In the model generation apparatus according to the above aspect, the training map may include a range in which a robotic device is allowed to be driven. The recommended path indicated by the true information may be a motion path recommended for the robotic device. This structure can improve, for a search module generated for motion planning of a movable body, the efficiency of pathfinding and reduce the effort in generating the search module.

The model generation apparatus according to the above aspect can generate a trained search module capable of finding the path with a minimum cost evaluated with an index. In the model generation apparatus according to the above aspect, the evaluation index may be distance, and the recommended path may be a shortest path. This structure can improve the efficiency of finding the shortest path and reduce the effort in generating the search module capable of finding the shortest path.

In the model generation apparatus according to the above aspect, the training map may include an image, and the plurality of nodes may include pixels. This structure can improve, for finding a path in an image, the efficiency of pathfinding and reduce the effort in generating the search module.

In the model generation apparatus according to the above aspect, the image may include a real image or a binary image. This structure can improve the efficiency of pathfinding a real image or a binary image and reduce the effort in generating the search module.

Aspects of the present invention are not limited to the model generation apparatus described above. One aspect of the present invention may be directed to a pathfinding apparatus that uses the trained search module generated by the above model generation apparatus. For example, a pathfinding apparatus according to one aspect of the present invention may include a map obtainer that obtains a target map, a searcher that finds a path from a start node to a goal node in the obtained target map using a search module having been trained, and an output unit that outputs information about a result of finding the path for the target map. The pathfinding apparatus is replaceable by, for example, a planning apparatus, a travel planning apparatus, a guidance apparatus, a motion planning apparatus, or a control apparatus for the type of task used in a situation.

In the pathfinding apparatus according to the above aspect, the target map may include a range in which a movable body is allowed to travel. The searcher may accordingly use the search module having been trained to find a recommended path for the movable body to travel from the start node to the goal node in the obtained target map. In the pathfinding apparatus according to another aspect, the target map may include a range in which a robotic device is allowed to be driven. The searcher may accordingly use the search module having been trained to find a recommended path for the robotic device to move from the start node to the goal node in the obtained target map.

In the pathfinding apparatus according to the above aspect, the information about the result of finding the path may include navigation in accordance with the path having been found. This structure allows a recommended path to be found efficiently and allows travel guidance or motion control to be performed in accordance with the pathfinding result (in other words, the resulting recommended path).

In one aspect of the present invention, another form of the model generation apparatus or the pathfinding apparatus according to the above aspects may be an information processing method, a program, or a storage medium storing the program readable by a computer or another device or machine for implementing some or all of the components described above. The computer-readable storage medium includes a medium storing a program or other information in an electrical, magnetic, optical, mechanical, or chemical manner. A pathfinding system according to one aspect of the present invention may include the model generation apparatus and the pathfinding apparatus according to any one of the above aspects.

For example, a model generation method according to another aspect of the present invention is an information processing method implementable with a computer. The method includes obtaining a plurality of training data pairs each including a combination of a training map and true information indicating a recommended path in the training map, and training a search module through machine learning using the plurality of training data pairs. The search module includes a neural network that estimates a cost of each of a plurality of nodes in an input map, an extraction operation to extract, from the plurality of nodes in the input map, one or more candidate nodes adjacent to a path node, and a selection operation to select, based on an estimation result from the neural network, a next path node from the extracted one or more candidate nodes to minimize a sum of the costs for the plurality of nodes. The search module finds a path from a start node being a first path node to a goal node through the extraction operation and the selection operation being iterated until the goal node is selected as a path node. The machine learning includes training the search module on each of the plurality of training data pairs to find a path fitting the recommended path indicated by the true information in response to receiving an input of the training map as the input map. In the machine learning, the training the search module includes performing, in a phase of forward propagation, the extraction operation and the selection operation, and replacing, in a phase of backpropagation, the extraction operation and the selection operation with differentiable alternative operations and differentiating the differentiable alternative operations to compute approximate gradients corresponding to differentiation calculations for the extraction operation and the selection operation.

For example, a model generation program according to another aspect of the present invention is a program for causing a computer to perform operations including obtaining a plurality of training data pairs each including a combination of a training map and true information indicating a recommended path in the training map, and training a search module through machine learning using the plurality of training data pairs. The search module includes a neural network that estimates a cost of each of a plurality of nodes in an input map, an extraction operation to extract, from the plurality of nodes in the input map, one or more candidate nodes adjacent to a path node, and a selection operation to select, based on an estimation result from the neural network, a next path node from the extracted one or more candidate nodes to minimize a sum of the costs for the plurality of nodes. The search module finds a path from a start node being a first path node to a goal node through the extraction operation and the selection operation being iterated until the goal node is selected as a path node. The machine learning includes training the search module on each of the plurality of training data pairs to find a path fitting the recommended path indicated by the true information in response to receiving an input of the training map as the input map. In the machine learning, the training the search module includes performing, in a phase of forward propagation, the extraction operation and the selection operation, and replacing, in a phase of backpropagation, the extraction operation and the selection operation with differentiable alternative operations and differentiating the differentiable alternative operations to compute approximate gradients corresponding to differentiation calculations for the extraction operation and the selection operation.

ADVANTAGEOUS EFFECTS

The technique according to the above aspects of the present invention improves the efficiency of pathfinding and reduces the cost in generating the search module.

BRIEF DESCRIPTION OF THE DRAWINGS

FIG. 1 is a schematic diagram of an example map including an obstacle that reduces search efficiency.
FIG. 2 is a schematic diagram of an example situation in one or more embodiments of the present invention.
FIG. 3 is a schematic diagram of a model generation apparatus according to an embodiment showing its example hardware configuration.
FIG. 4 is a schematic diagram of a pathfinding apparatus according to the embodiment showing its example hardware configuration.
FIG. 5 is a schematic diagram of the model generation apparatus according to the embodiment showing its example software configuration.
FIG. 6 is a schematic diagram of the pathfinding apparatus according to the embodiment showing its example software configuration.
FIG. 7 is a flowchart of an example procedure performed by the model generation apparatus according to the embodiment.
FIG. 8 is a flowchart of an example procedure performed by the pathfinding apparatus according to the embodiment.
FIG. 9 is a schematic diagram of another example situation in one or more embodiments of the present invention.
FIG. 10 is a schematic diagram of another example situation in one or more embodiments of the present invention.
FIG. 11A is a diagram of a target map used for evaluation.
FIG. 11B is a diagram of a target map used for evaluation.
FIG. 11C is a diagram of a target map used for evaluation.
FIG. 12A is a diagram of the target map in FIG. 11A, showing the pathfinding result obtained with the A* search algorithm (comparative example) and the nodes examined in the search.
FIG. 12B is a diagram of the target map in FIG. 11B, showing the pathfinding result obtained with the A* search algorithm (comparative example) and the nodes examined in the search.
FIG. 12C is a diagram of the target map in FIG. 11C, showing the pathfinding result obtained with the A* search algorithm (comparative example) and the nodes examined in the search.
FIG. 13A is a diagram of the target map in FIG. 11A, showing the cost estimation result for each node obtained with a neural network in a working example.
FIG. 13B is a diagram of the target map in FIG. 11B, showing the cost estimation result for each node obtained with the neural network in the working example.
FIG. 13C is a diagram of the target map in FIG. 11C, showing the cost estimation result for each node obtained with the neural network in the working example.
FIG. 14A is a diagram of the target map in FIG. 11A, showing the pathfinding result obtained with a search module in the working example and the nodes examined in the search.
FIG. 14B is a diagram of the target map in FIG. 11B, showing the pathfinding result obtained with the search module in the working example and the nodes examined in the search.
FIG. 14C is a diagram of the target map in FIG. 11C, showing the pathfinding result obtained with the search module in the working example and the nodes examined in the search.

DETAILED DESCRIPTION

One or more embodiments of the present invention (hereafter, the present embodiment) will now be described with reference to the drawings. The embodiments described below are mere examples of the present invention in all aspects. The embodiments may be variously modified or altered without departing from the scope of the present invention. More specifically, the present invention may be implemented as appropriate using the configuration specific to each embodiment. Although data used in the present embodiment is described in a natural language, such data may be specifically defined using any computer-readable language, such as a pseudo language, commands, parameters, or a machine language.

1. Example Use

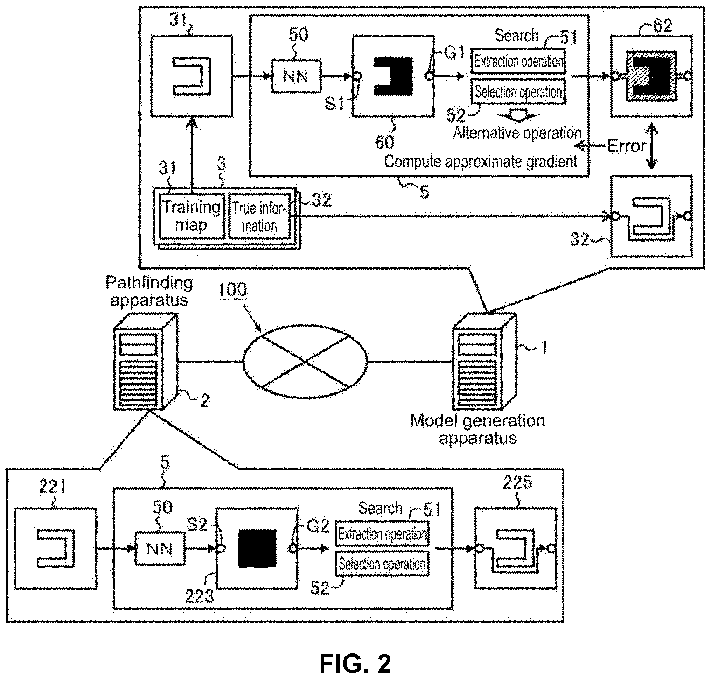

FIG. 2 is a schematic diagram of an example situation in one or more embodiments of the present invention. As shown in FIG. 2, a pathfinding system 100 according to the present embodiment includes a model generation apparatus 1 and a pathfinding apparatus 2.

The model generation apparatus 1 according to the present embodiment is a computer that generates a search module 5 (search model) trained through machine learning. The model generation apparatus 1 according to the present embodiment obtains multiple training data pairs 3 each including a combination of a training map 31 and true information 32 indicating a recommended path in the training map 31. The model generation apparatus 1 according to the present embodiment uses the obtained multiple training data pairs 3 to train the search module 5 through machine learning.

The search module 5 in the present embodiment includes a first calculation module that performs an operation to estimate the cost for each node in an input map and a second calculation module that performs, based on the estimated costs, an operation to find a path with a minimum sum of the costs. The first calculation module includes a neural network 50. The second calculation module includes an operation (hereafter referred to as an extraction operation) 51 to extract one or more candidate nodes that are adjacent to a path node from multiple nodes in the input map and an operation (hereafter referred to as a selection operation) 52 to select the next path node from the extracted candidate nodes to minimize the sum of the costs from the start node to the goal node based on the estimation results from the neural network 50.

The search module 5 sets the start node as the first path node and iterates the extraction operation 51 and the selection operation 52 until the goal node is selected as a path node to find a path from the start node to the goal node. In other words, the search module 5 performs the operations (1) to (4) described above using the first calculation module and the second calculation modules to find the path with a minimum cost. The estimation results from the neural network 50 are used in calculating Formula 1 above. The extraction operation 51 corresponds to the operation in (3)(B) described above. Setting the start node as the first path node and the selection operation 52 correspond to the operation in (3)(A) described above.

The machine learning includes training the search module 5 on each training data pair 3 to find, in response to receiving the training map 31 as an input map, a path that fits the recommended path indicated by the true information 32. More specifically, the neural network 50 includes multiple operation parameters including, for example, connection weights between neurons and the threshold of each neuron. The model generation apparatus 1 first uses the search module 5 to perform trial pathfinding with the training map 31 in each training data pair 3. In this trial process, the model generation apparatus 1 uses the neural network 50 to estimate the cost for each node in the training map 31 in each training data pair 3. In other words, the model generation apparatus 1 inputs the training map 31 into the neural network 50 and performs a forward propagation operation with the neural network 50. This operation allows the model generation apparatus 1 to obtain a cost estimation result 60 for each node in the training map 31. Subsequently, the model generation apparatus 1 sets a start node S1 as the first path node. The model generation apparatus 1 then iterates, using the obtained estimation result 60, the extraction operation 51 and the selection operation 52 until a goal node G1 is selected as a path node. With these series of forward propagation operations, the model generation apparatus 1 can obtain the result of the trial search, or more specifically, a result (hereafter also referred to as a pathfinding result) 62 of finding a path with the training map 31. Subsequently, the model generation apparatus 1 computes an error between the pathfinding result 62 and the recommended path (ground truth) indicated by the true information 32. The model generation apparatus 1 adjusts the value of each operation parameter for the neural network 50 by backpropagating the gradient of the computed error. Training the search module 5 includes adjusting, through these series of processes (in other words, the trial search process using forward propagation and the adjustment process of operation parameters using backpropagation), the value of each operation parameter for the neural network 50 to yield the pathfinding result 62 that fits the true information 32.

In the machine learning, the model generation apparatus 1 performs the extraction operation 51 and the selection operation 52 without any additional operation in the phase of forward propagation (trial search). In the phase of backpropagation (adjustment of operation parameters), the model generation apparatus 1 replaces the extraction operation 51 and the selection operation 52 with differentiable alternative operations and differentiates the resulting alternative operations to compute approximate gradients corresponding to the differentiation calculations for the extraction operation 51 and the selection operation 52. In other words, during the machine learning, the model generation apparatus 1 in the trial search phase performs the extraction operation 51 and the selection operation 52 without any additional operation and obtains the pathfinding result 62 for the training map 31 in each training data pair 3. In contrast, the extraction operation 51 and the selection operation 52 are non-differentiable and cannot be used to backpropagate the gradient of the error without any additional operation. In the phase of backpropagating the gradient of the error derived from the trial phase, the model generation apparatus 1 thus uses the approximate gradients computed by differentiating the alternative operations as the resulting differentiation calculations for the extraction operation 51 and the selection operation 52 to backpropagate the gradients of the errors, thus adjusting the value of each operation parameter for the neural network 50.

The alternative operation for the extraction operation 51 may be any operation that can compute the approximate gradient of the extraction operation 51 and may be determined as appropriate in each embodiment. The alternative operation for the extraction operation 51 may include, for example, a linear convolution function using a fixed-size rectangular filter, a graph convolution operation using a fixed-size graph, or similar functions. The approximate gradient of the extraction operation 51 may be the gradient of such a function. The alternative operation for the extraction operation 51 may include a lookup table corresponding to the function. Similarly, the alternative operation for the selection operation 52 may be any operation that can compute the approximate gradient of the selection operation 52 and may be determined as appropriate in each embodiment. The alternative operation for the selection operation 52 may include, for example, a straight-through softmin function, straight-through softmin with temperature, weighted straight-through softmin, a straight-through Gumbel softmin function, or similar functions. The approximate gradient of the selection operation 52 may be the gradient of such a function. The model generation apparatus 1 can thus generate, through the machine learning, the trained search module 5 capable of finding a recommended path with a minimum cost for input map.

The pathfinding apparatus 2 according to the present embodiment is a computer that performs pathfinding with a given map using the trained search module 5. The pathfinding apparatus 2 first obtains a target map 221 to undergo pathfinding. The pathfinding apparatus 2 then uses the trained search module 5 to find a path from a start node S2 to a goal node G2 in the obtained target map 221.

More specifically, similarly to the above trial phase for the model generation apparatus 1, the pathfinding apparatus 2 inputs the target map 221 into the trained neural network 50 and performs a forward propagation operation with the trained neural network 50. The pathfinding apparatus 2 can obtain, through the operation, a cost estimation result 223 for each node in the target map 221. The pathfinding apparatus 2 then sets the start node S2 as the first path node. The pathfinding apparatus 2 then iterates, using the obtained estimation results 223, the extraction operation 51 and the selection operation 52 until the goal node G2 is selected as a path node. In the operation with the second calculation module, the pathfinding apparatus 2 performs the extraction operation 51 and the selection operation 52 without any additional operation as in the above trial phase for the model generation apparatus 1.

With the series of these operations, the pathfinding apparatus 2 can yield a result (hereafter also referred to as a pathfinding result) 225 of finding the path with the target map 221. The pathfinding apparatus 2 then outputs information about the pathfinding result 225 for the target map 221. The pathfinding apparatus 2 according to the present embodiment is replaceable by, for example, a planning apparatus, a travel planning apparatus, a guidance apparatus, a motion planning apparatus, or a control apparatus for the type of task used in a situation.

The maps (the training map 31 and the target map 221) used in the present embodiment may be in any data format that includes multiple nodes and can undergo pathfinding as appropriate, and may be selected as appropriate in each embodiment. In one example, the maps (the training map 31 and the target map 221) may be represented in a list format or a graph format. Obstacles (immovable areas) may be represented by, for example, connection or disconnection between nodes or information provided to nodes.

In one example, the graph format includes the maps (the training map 31 and the target map 221) being images (image data). In this case, nodes are pixels. An image can be used as a graph of a two-dimensional grid, with each node connected with four or eight adjacent nodes. The four adjacent nodes are four pixels located above, below, left, or right of the target pixel. The eight adjacent nodes are eight pixels surrounding the target pixel. The image may be a real image or a binary image. For finding a path for a movable body, the real image may be, for example, an aerial photograph, a photograph taken by a drone, or any other images generated by photographing the range in which the movable body is allowed to travel. For finding a motion path for a robot, the real image may be, for example, an image generated by photographing the range in which the robot moves, such as a work site. The binary image includes pixels representing, as appropriate, movable areas and immovable areas in a binary form. The binary image may be generated by binarizing a real image as appropriate. The model generation apparatus 1 according to the present embodiment uses an image as a map to generate, through the machine learning, the trained search module 5 capable of finding a path in an image.

The true information 32 may indicate, as appropriate, the ground truth for the recommended path in the training map 31. The true information 32 may be in any data format selected as appropriate for the representation of the pathfinding result. For the pathfinding result represented as an image, the true information 32 may be, for example, an image indicating the ground truth of the recommended path (FIG. 2 shows an example of such an image).

The cost may be represented in any numerical form set as appropriate to correspond to the degree by which the path is recommended or not recommended to include the node using an index. In one example, the cost may be represented as being proportional to numerical values (in other words, greater numeral values indicate higher costs). In another example, the cost may be represented as being inversely proportional to numerical values (in other words, less numeral values indicate higher costs). For a degree of not being recommended, the cost may be replaced by, for example, a load or a penalty. For a degree of being recommended, the cost may be replaced by, for example, the degree of recommendation or a reward. In this case, the cost minimization may be replaced by maximization of, for example, the recommendation degree. The index for evaluating the cost may be designed in accordance with any of the above manners. For ease of explanation, the cost in the present embodiment is designed to have a greater value for a higher degree of not being recommended. For the cost being designed to have greater values for higher recommendation degrees, the selection operation 52 may be replaced to select, instead of selecting an element with a minimum value, an element with the maximum value. The alternative operation of the selection operation 52 may also be replaced as appropriate. More specifically, the alternative operation for the selection operation 52 may include, for example, a straight-through softmax function, straight-through softmax with temperature, weighted straight-through softmax, a straight-through Gumbel softmax function, or similar functions.

The index for evaluating the degree of recommendation may be, for example, distance, time, expense, the degree of unsafety, the degree of congestion, or attractiveness. In one example, distance may be used as an evaluation index. The cost may be set to be higher for longer distance. In this case, the recommended path to be found is the shortest path from the start node to the goal node (the path with a minimum distance).

In another example, time may be used as an evaluation index. The cost may be set to be higher for longer time. In this case, the recommended path to be found is a path with a minimum time taken to travel from the start node to the goal node.

In another example, expense may be used as an evaluation index. The cost may be set to be higher for greater expense. In this case, the recommended path to be found is a path with a minimum expense to travel from the start node to the goal node. Expense may be, for example, fuel expense, electricity expense, transportation expense, or an expressway toll.

In another example, the degree of unsafety may be used as an evaluation index. The cost may be set to be higher for a higher degree of unsafety. In this case, the recommended path to be found is a path with a minimum safety concern (in other words, the safest path) in traveling from the start node to the goal node. For finding a path for a movable body, the degree of unsafety may be set in accordance with, for example, the possibility of the movable body encountering an accident, crime, or other incidents. For finding a path for a robot, the degree of unsafety may be set in accordance with, for example, the possibility of collision, destruction, or other failures.

In another example, the degree of congestion may be used as an evaluation index. The cost may be set to be higher for a higher degree of congestion. In this case, the recommended path to be found avoids congested sites. Congested sites are, for example, sites with high people density (for finding a travel path for a person), sites with traffic congestion (for finding a travel path for a vehicle), and sites with obstacles densely located (for finding a motion path for a robotic device).

In another example, attractiveness may be used as an evaluation index. The cost may be set to be higher for lower attractiveness. In this case, the recommended path to be found includes a highly attractive site. The attractiveness may be determined in accordance with an artificial index such as the quality of scenery (for finding a travel path for a movable body) or the magnificence of a motion (for finding a motion path for a robotic device).

These situations can occur when, for example, a travel path for a movable body (e.g., a person, a vehicle, or a drone) or a motion path for a robot is planned. The cost may be designed as appropriate in accordance with the situation in each case. The cost may be designed using several of the above indexes in combination. The model generation apparatus 1 according to the present embodiment can generate, through the above machine learning, the trained search module 5 capable of finding the recommended path in accordance with the designed cost.

As described above, the model generation apparatus 1 according to the present embodiment trains both the first calculation module (neural network 50) and the second calculation module (the extraction operation 51 and the selection operation 52) through machine learning, rather than the first calculation module alone. In the present embodiment, the true cost values for each training map 31 is not to be prepared, but the true information 32 that indicates the recommended path is to be prepared. This eliminates examining all nodes in the training map 31 in the search and allows, for example, the search results or records of known algorithms to be used directly as recommended paths. This reduces the work time for and the burden of preparing the true information 32 as compared with identifying the true cost values of all nodes in the training map 31. The structure according to the present embodiment can thus reduce the effort in generating the trained search module 5.

During the machine learning, the search module 5 is trained to optimally find the recommended path. This indirectly trains the neural network 50 on the recommended path indicated by the true information 32 to increase the costs of the areas that reduce search efficiency. The pathfinding apparatus 2 can thus improve the efficiency of pathfinding appropriately using the cost estimation results 223 from the trained neural network 50.

In the machine learning, the model generation apparatus 1 according to the present embodiment performs, in the phase of forward propagation, the extraction operation 51 and the selection operation 52 without any additional operation and replaces, in the phase of backpropagation, the extraction operation 51 and the selection operation 52 with differentiable alternative operations. The model generation apparatus 1 then differentiates the resulting alternative operations to compute the approximate gradients corresponding to the differential calculations for the extraction operation and the selection operation. This allows the search module 5 including the non-differentiable operations (the extraction operation 51 and the selection operation 52) to be trained appropriately through machine learning (specifically, adjustment of the operation parameters for the neural network 50).

In the example of FIG. 2, the model generation apparatus 1 and the pathfinding apparatus 2 are connected to each other with a network. The network may be selected as appropriate from, for example, the Internet, a wireless communication network, a mobile communication network, a telephone network, and a dedicated network. The model generation apparatus 1 and the pathfinding apparatus 2 may communicate data between them in any other manner selected as appropriate in each embodiment. For example, the model generation apparatus 1 and the pathfinding apparatus 2 may communicate data between them using a storage medium.

In the example of FIG. 2, the model generation apparatus 1 and the pathfinding apparatus 2 are separate computers. However, the pathfinding system 100 according to the present embodiment may have any other structure determined as appropriate in each embodiment. For example, the model generation apparatus 1 and the pathfinding apparatus 2 may be integrated into a single computer. For example, at least one of the model generation apparatus 1 or the pathfinding apparatus 2 may include multiple computers.

2. Example Structure

Hardware Configuration

Model Generation Apparatus

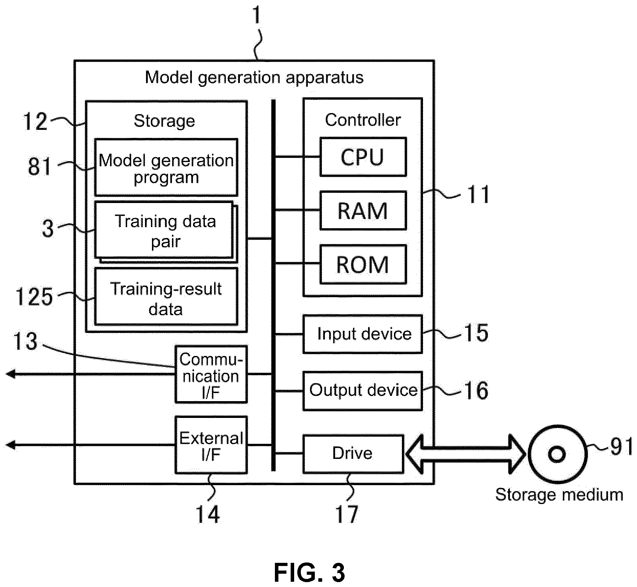

FIG. 3 is a schematic diagram of the model generation apparatus 1 according to the present embodiment showing its example hardware configuration. As shown in FIG. 3, the model generation apparatus 1 according to the present embodiment is a computer including a controller 11, a storage 12, a communication interface 13, an external interface 14, an input device 15, an output device 16, and a drive 17 that are electrically connected to one another. In FIG. 3, the communication interface and the external interface are abbreviated as a communication I/F and an external I/F.

The controller 11 includes, for example, a central processing unit (CPU) as a hardware processor, a random-access memory (RAM), and a read-only memory (ROM). The controller 11 performs information processing based on programs and various items of data. The storage 12, as an example of a memory, includes, for example, a hard disk drive or a solid-state drive. In the present embodiment, the storage 12 stores various items of information such as a model generation program 81, the multiple training data pairs 3, and training-result data 125.

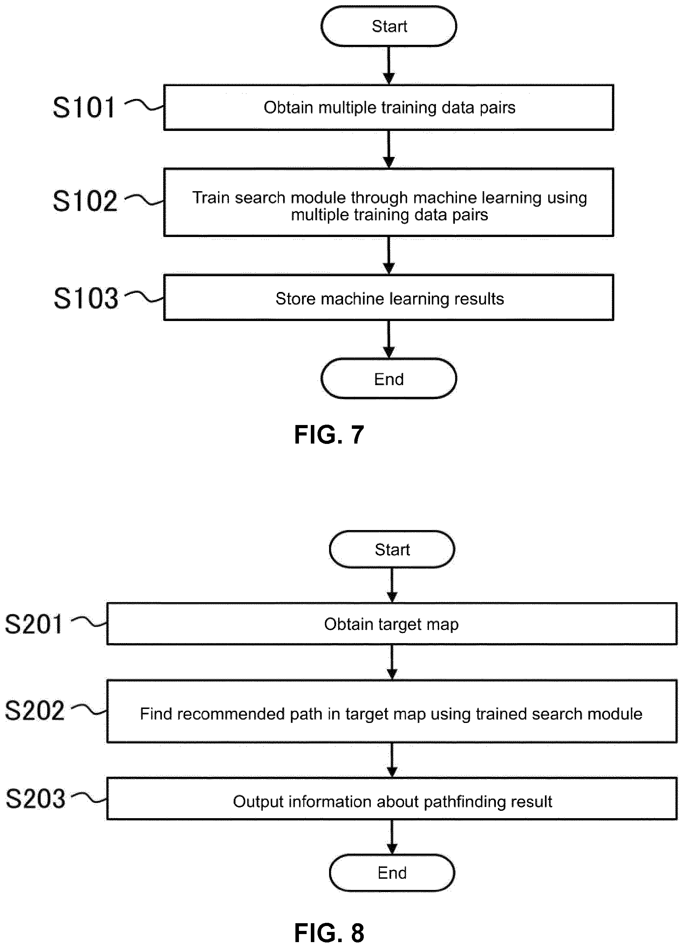

The model generation program 81 causes the model generation apparatus 1 to perform information processing (FIG. 7) for machine learning to generate the trained search module 5 (described later). The model generation program 81 includes a series of commands for the information processing. The multiple training data pairs 3 are used to generate the trained search module 5. The training-result data 125 indicates information about the search module 5 generated by training. In the present embodiment, the training-result data 125 results from the model generation program 81 being executed. This will be described in detail later.

The communication interface 13 is, for example, a wired local area network (LAN) module or a wireless LAN module for wired or wireless communication through a network. The model generation apparatus 1 may use the communication interface 13 to communicate data with another information processing device through a network. The external interface 14 is an interface for connection to an external device and may be, for example, a universal serial bus (USB) port or a dedicated port. The type and the number of external interfaces 14 may be selected as appropriate. The model generation apparatus 1 may be connected to a device (e.g., a camera or another computer) for obtaining the training map 31 with at least one of the communication interface 13 or the external interface 14.

The input device 15 includes, for example, a mouse and a keyboard. The output device 16 includes, for example, a display and a speaker. An operator such as a user may operate the model generation apparatus 1 using the input device 15 and the output device 16.

The drive 17 is, for example, a compact disc (CD) drive or a digital versatile disc (DVD) drive for reading programs or other information stored in a storage medium 91. The storage medium 91 stores programs or other information in an electrical, magnetic, optical, mechanical, or chemical manner to allow a computer or another device or machine to read the stored programs or other information. At least one of the above model generation program 81 or the multiple training data pairs 3 may be stored in the storage medium 91. The model generation apparatus 1 may obtain at least one of the model generation program 81 or the multiple training data pairs 3 from the storage medium 91. In FIG. 3, the storage medium 91 is a disc storage, such as a CD or a DVD. However, the storage medium 91 is not limited to a disc storage. One example of the storage medium other than a disc storage is a semiconductor memory such as a flash memory. The drive 17 may be of any type selected as appropriate for the type of the storage medium 91.

For the specific hardware configuration of the model generation apparatus 1, components may be eliminated, replaced, or added as appropriate in each embodiment. For example, the controller 11 may include multiple hardware processors. Each hardware processor may include a microprocessor, a field-programmable gate array (FPGA), a digital signal processor (DSP), or other processors. The storage 12 may be the RAM and the ROM included in the controller 11. At least one of the communication interface 13, the external interface 14, the input device 15, the output device 16, or the drive 17 may be eliminated. The model generation apparatus 1 may include multiple computers. In this case, each computer may have the same or a different hardware configuration. The model generation apparatus 1 may also be an information processor dedicated to a service to be provided, or may be a general-purpose server or a general-purpose personal computer (PC).

Pathfinding Apparatus

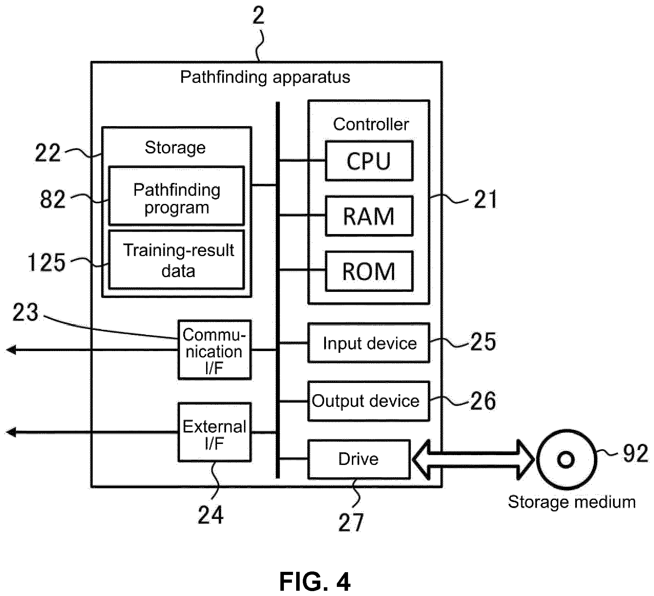

FIG. 4 is a schematic diagram of the pathfinding apparatus 2 according to the present embodiment showing its example hardware configuration. As shown in FIG. 4, the pathfinding apparatus 2 according to the present embodiment is a computer including a controller 21, a storage 22, a communication interface 23, an external interface 24, an input device 25, an output device 26, and a drive 27 that are electrically connected to one another.

The components of the pathfinding apparatus 2 from the controller 21 to the drive 27 and a storage medium 92 may have the same structures as the components of the above model generation apparatus 1 from the controller 11 to the drive 17 and the storage medium 91. The controller 21 includes, for example, a CPU as a hardware processor, a RAM, and a ROM, and performs various types of information processing operations based on programs and data. The storage 22 includes, for example, a hard disk drive or a solid-state drive. In the present embodiment, the storage 22 stores various items of information including a pathfinding program 82 and the training-result data 125.

The pathfinding program 82 causes the pathfinding apparatus 2 to perform information processing (FIG. 8) for performing a pathfinding task with the trained search module 5 (described later). The pathfinding program 82 includes a series of commands for the information processing. At least one of the pathfinding program 82 or the training-result data 125 may be stored in the storage medium 92. The pathfinding apparatus 2 may obtain at least one of the pathfinding program 82 or the training-result data 125 from the storage medium 92.

The pathfinding apparatus 2 may be connected to a device (e.g., a camera or another computer) for obtaining the target map 221 with at least one of the communication interface 23 or the external interface 24.

For the specific hardware configuration of the pathfinding apparatus 2, components may be eliminated, replaced, or added as appropriate in each embodiment. For example, the controller 21 may include multiple hardware processors. Each hardware processor may be a microprocessor, an FPGA, a DSP, or other processors. The storage 22 may be the RAM and the ROM included in the controller 21. At least one of the communication interface 23, the external interface 24, the input device 25, the output device 26, or the drive 27 may be eliminated. The pathfinding apparatus 2 may include multiple computers. In this case, each computer may have the same or a different hardware configuration. The pathfinding apparatus 2 may be an information processing apparatus dedicated to a service to be provided, or may be a general-purpose server, a general-purpose PC, a mobile terminal (e.g., smartphone), a tablet computer, or a programmable logic controller (PLC).

Software Configuration

Model Generation Apparatus

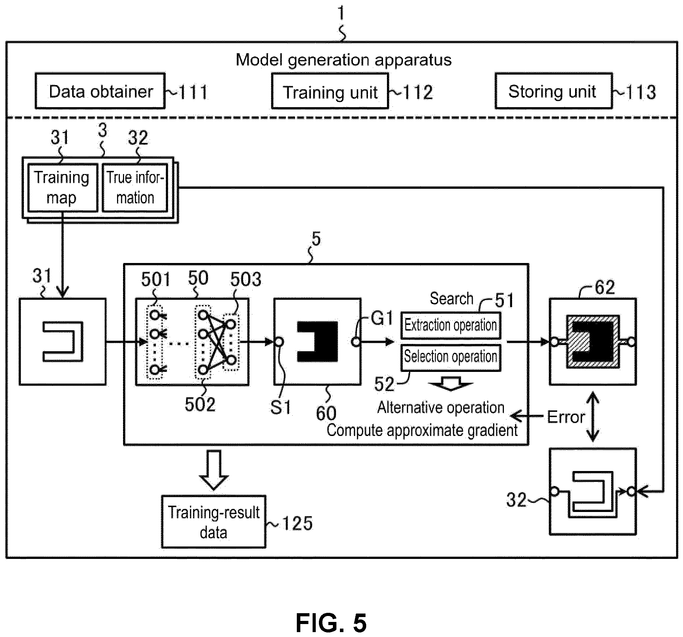

FIG. 5 is a schematic diagram of the model generation apparatus 1 according to the present embodiment showing its example software configuration. The controller 11 in the model generation apparatus 1 loads the model generation program 81 stored in the storage 12 into the RAM. The CPU in the controller 11 then interprets and executes the commands included in the model generation program 81 loaded in the RAM to control each component. The model generation apparatus 1 according to the present embodiment thus operates as a computer including a data obtainer 111, a training unit 112, and a storing unit 113 as software modules as shown in FIG. 5. In other words, in the present embodiment, each software module in the model generation apparatus 1 is implemented by the controller 11 (CPU).

The data obtainer 111 obtains multiple training data pairs 3. Each training data pair 3 includes a combination of a training map 31 and true information 32. The training map 31 includes multiple nodes. Each node may correspond to any position in a real space or a virtual space. For finding, for example, a travel path for a movable body, each node may correspond to any location in a spatial area in which the movable body is allowed to travel. For finding, for example, a motion path for a robotic device, each node may correspond to any location in the working area of the robotic device. For finding, for example, a transportation path, each node may correspond to any geographic location such as a transportation hub. The training map 31 may be an image, and each node may be a pixel in the image. The image may be a real image or a binary image. The true information 32 indicates the ground truth for the recommended path from the start node S1 to the goal node G1 in the training map 31.

The training unit 112 trains the search module 5 through machine learning using the obtained multiple training data pairs 3. The search module 5 includes the neural network 50, the extraction operation 51, and the selection operation 52. The neural network 50 estimates the cost for each node in an input map. The extraction operation 51 extracts one or more candidate nodes adjacent to a path node from the nodes in the input map. The selection operation 52 selects, based on the estimation results from the neural network 50, the next path node from the extracted candidate nodes to minimize the sum of the costs from the start node to the goal node. The search module 5 sets the start node as the first path node and iterates the extraction operation 51 and the selection operation 52 until the goal node is selected as a path node to find a path from the start node to the goal node.

The machine learning uses backpropagation to train the search module 5 on each training data pair 3 to find, in response to receiving the training map 31 as an input map, a path that fits the ground truth for the recommended path indicated by the true information 32. In the machine learning, the training unit 112 performs the extraction operation 51 and the selection operation 52 without any additional operation. In the phase of backpropagation, the training unit 112 replaces each of the extraction operation 51 and the selection operation 52 with a differentiable alternative operation and differentiates the resulting alternative operations to compute approximate gradients corresponding to the differentiation calculations for the extraction operation 51 and the selection operation 52.

The storing unit 113 generates information about the trained search module 5 generated through machine learning as the training-result data 125, and stores the generated training-result data 125 into a predetermined storage area. The training-result data 125 may be generated as appropriate to include information for reproducing the trained search module 5.

Search Module

As shown in FIG. 5, the neural network 50 included in the search module 5 in the present embodiment is a fully connected neural network, including an input layer 501, one or more intermediate (hidden) layers 502, and an output layer 503.

The input layer 501 receives an input of a map including nodes to undergo cost estimation. The cost can be affected by the position of the start node and the goal node, as well as the positions of obstacles and other objects in the map. Thus, the input layer 501 may further receive, together with the input of the map, an input of information about at least one of the start node or the goal node. The output layer 503 outputs the cost estimation result for each node in the input map. The number of intermediate layers 502 may be determined as appropriate in each embodiment.

Each of the layers 501 to 503 includes one or more neurons (nodes). Each of the layers 501 to 503 may include any number of neurons determined as appropriate in each embodiment. The number of neurons in the input layer 501 may be determined as appropriate in accordance with, for example, the input form of, for example, the dimensionality of the above input. The number of neurons in the output layer 503 may be determined as appropriate in accordance with, for example, the output form of, for example, the dimensionality of the above output. In the present embodiment, the neurons included in each of the layers 501 to 503 are connected to all the neurons in the adjacent layers.

Each of the layers 501 to 503 has a weight defined for each connection (connection weight). Each neuron has a preset threshold. An output of each neuron is basically determined depending on whether the sum of the product of each input and the corresponding weight exceeds the threshold. The threshold may be expressed using an activation function. In this case, the sum of the product of each input and the corresponding weight is input into the activation function, and the activation function is computed to determine the output of each neuron. The type of the activation function may be selected as appropriate. The connection weights between neurons included in each of the layers 501 to 503 and the threshold of each neuron are examples of the operation parameters.

In the above machine learning, the training unit 112 uses the training map 31 included in each training data pair 3 as training data (input data) and the true information 32 as ground truth data (a supervisory signal or a label).

More specifically, in the trial search phase, the training unit 112 first inputs the training map 31 included in each training data pair 3 into the input layer 501 and performs a forward propagation operation with the neural network 50. With this operation, the training unit 112 obtains, from the output layer 503, a cost estimation result 60 for each node in the training map 31. The training unit 112 sets the start node S1 as the first path node. The training unit 112 then iterates, using the obtained estimation results 60, the extraction operation 51 and the selection operation 52 until the goal node G1 is selected as a path node. In the forward propagation operation, the training unit 112 performs the extraction operation 51 and the selection operation 52 without any additional operation. With these series of forward propagation operations (trial search), the training unit 112 obtains the pathfinding result 62 for the training map 31.

The training unit 112 computes an error between the obtained pathfinding result 62 and the ground truth indicated by the true information 32 associated with the input training map 31. The training unit 112 then computes the gradient of the error, and adjusts the value of each operation parameter by backpropagating the computed gradient of the error. In this backpropagation operation process, the training unit 112 uses the approximate gradient computed by differentiating the alternative operations as a result of differentiation for the extraction operation 51 and the selection operation 52.

The training unit 112 iterates, for each training data pair 3, the above series of processes for adjusting the value of each operation parameter to reduce the sum of the computed errors. The model generation apparatus 1 can thus generate, through the machine learning, the trained search module 5 capable of finding the recommended path with the minimum cost for input map.

The storing unit 113 generates the training-result data 125 used to reproduce the trained search module 5 generated through the above machine learning. The training-result data 125 may have any structure that allows reproduction of the trained search module 5. The structure may be determined as appropriate in each embodiment. In one example, the training-result data 125 may include information indicating the values of the operation parameters obtained through adjustment in the above machine learning. In some embodiments, the training-result data 125 may include information indicating at least one of the architecture of the neural network 50, the details of the extraction operation 51, or the details of the selection operation 52. The architecture of the neural network 50 may be defined using, for example, the number of layers from an input layer to an output layer, the types of layers, the number of neurons included in each layer, and the connection relationship between neurons in adjacent layers. The storing unit 113 stores the generated training-result data 125 into a predetermined storage area.

Pathfinding Apparatus

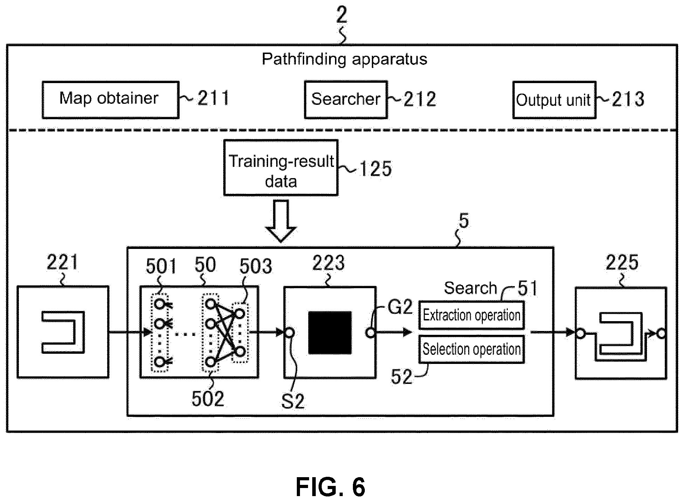

FIG. 6 is a schematic diagram of the pathfinding apparatus 2 according to the present embodiment showing its example software configuration. The controller 21 in the pathfinding apparatus 2 loads the pathfinding program 82 stored in the storage 22 into the RAM. The CPU in the controller 21 then interprets and executes the commands included in the pathfinding program 82 loaded in the RAM to control each component. As shown in FIG. 6, the pathfinding apparatus 2 according to the present embodiment thus operates as a computer including a map obtainer 211, a searcher 212, and an output unit 213 as software modules. In other words, in the present embodiment, each software module in the pathfinding apparatus 2 is implemented by the controller 21 (CPU) in the same manner as in the model generation apparatus 1.

The map obtainer 211 obtains the target map 221 to undergo a pathfinding task. The searcher 212 stores the training-result data 125 and thus includes the trained search module 5. The searcher 212 uses the trained search module 5 to find a path from the start node S2 to the goal node G2 in the obtained target map 221. More specifically, the searcher 212 inputs the obtained target map 221 into the input layer 501 of the trained neural network 50 and performs a forward propagation operation with the trained neural network 50. This operation allows the searcher 212 to obtain, from the output layer 503, the cost estimation result 223 for each node in the target map 221. The searcher 212 then iterates, using the obtained estimation results 223, the extraction operation 51 and the selection operation 52 until the goal node G2 is selected as the path node. In this operation with the second calculation module, the searcher 212 performs the extraction operation 51 and the selection operation 52 without any additional operation, as in the phase of forward propagation (trial search) in the above machine learning. With these series of operations, the searcher 212 obtains the pathfinding result 225 for the target map 221. The output unit 213 outputs information about the obtained pathfinding result 225.

Other Considerations

Each software module in the model generation apparatus 1 and the pathfinding apparatus 2 will be described in detail in the operation examples below. In the present embodiment, each software module in the model generation apparatus 1 and the pathfinding apparatus 2 is implemented by a general-purpose CPU. However, some or all of the software modules may be implemented by one or more dedicated processors (e.g., graphics processing units). Each of the modules may be implemented as a hardware module. For the software configurations of the model generation apparatus 1 and the pathfinding apparatus 2, software modules may be eliminated, replaced, or added as appropriate in each embodiment.

3. Operation Examples

Model Generation Apparatus

FIG. 7 is a flowchart of an example procedure for machine learning performed by the model generation apparatus 1 according to the present embodiment. The procedure performed by the model generation apparatus 1 described below is an example of a model generation method. The procedure performed by the model generation apparatus 1 described below is a mere example, and each of its steps may be modified in any possible manner. In the procedure below, steps may be eliminated, replaced, or added as appropriate in each embodiment.

Step S101

In step S101, the controller 11 operates as the data obtainer 111 and obtains multiple training data pairs 3.

Each training data pair 3 may be generated as appropriate. In one example, a training map 31 including multiple nodes is first generated as a search space. The search space may be defined in accordance with the task, such as planning, for example, the travel path of a movable body, the motion path of a robotic device, or the transit of transportation systems. The search space may be defined in a real space or a virtual space. The training map 31 may be manually generated as appropriate. The search space may be at least partially changed to generate multiple different training maps 31. A training map 31 being a real image may be generated by photographing the spatial area to be a target of pathfinding with a camera. A training map 31 being a binary image may be generated by binarizing each pixel in a real image captured with a camera in any selected manner. The binary image may be generated manually. The training map 31 may include multiple images.

Subsequently, true information 32 indicating the ground truth for the recommended path from the start node to the goal node is generated for the generated training map 31. The recommended path may be obtained as appropriate. In one example, the recommended path may be preset manually by an operator. In another example, the recommended path may be obtained by inputting the training map 31 into known search algorithms, such as Dijkstra's algorithm, best-first search, or the A* search algorithm. In still another example, for a search space defined in a real space, the records of the actual travel path or the planned travel path from the start node to the goal node in the search space may be used as the recommended path. Although the intended ground truth for the recommended path is the path with a minimum sum of costs, one or more pieces of the true information 32 may not indicate a path with a minimum sum of costs. The cost may be evaluated in accordance with, for example, distance, time, expense, the degree of unsafety, the degree of congestion, or attractiveness. In one example, distance may be used as an evaluation index of the cost. The true information 32 may indicate the shortest distance as the ground truth for the recommended path. The true information 32 may be in any data format that can represent the recommended path. The data format may be selected as appropriate in each embodiment. In one example, the training map 31 may be an image. The true information 32 may also be an image, in which the recommended path is indicated.

The generated true information 32 is then associated with the training map 31. In this manner, each training data pair 3 is generated. One training map 31 may include multiple pairs of start and goal nodes, with at least one of the start node or the goal node being different between the pairs. True information 32 may be generated for each generated pair of nodes and associated with the training map 31. In this manner, multiple different training data pairs 3 may be generated from one training map 31.

Each training data pair 3 may be automatically generated through a computer operation or at least partially manually generated through an operation performed by an operator. Each training data pair 3 may be generated by the model generation apparatus 1 or by a computer other than the model generation apparatus 1. When the model generation apparatus 1 generates each training data pair 3, the controller 11 may perform the generation process described above automatically or in response to a manual operation performed by an operator with the input device 15 to obtain the training data pair 3. When another computer generates each training data pair 3, the controller 11 may obtain the training data pair 3 generated by the other computer through, for example, a network or the storage medium 91. Some of the multiple training data pairs 3 may be generated by the model generation apparatus 1, and the remaining of the multiple training data pairs 3 may be generated by one or more other computers.

Any number of training data pairs 3 may be obtained. The number of training data pairs 3 to be obtained may be determined as appropriate to perform machine learning in each embodiment. After obtaining the multiple training data pairs 3, the controller 11 advances the processing to subsequent step S102.

Step S102

In step S102, the controller 11 operates as the training unit 112 and trains the search module 5 through machine learning using the obtained multiple training data pairs 3.

The machine learning first includes, for example, initializing the search module 5 to be trained through the machine learning. In initializing the neural network 50 included in the search module 5, the architecture of the neural network 50 (e.g., the number of layers, the types of layers, the number of neurons in each layer, or the connection relationship between neurons in adjacent layers) and the default values of operation parameters for the neural network 50 are preset as appropriate. The architecture of the neural network 50 and the default values of the operation parameters for the neural network 50 may be preset using a template or may be input by an operator. For relearning, the neural network 50 may be initialized based on the training-result data obtained through past machine learning.

The extraction operation 51 and the selection operation 52 may be designed as appropriate. The extraction operation 51 extracts candidate nodes (in other words, the nodes adjacent to a path node) that may be visited next to the path node and are typically neighboring the path node. The candidate nodes extracted by the extraction operation 51 may include, other than the nodes physically neighboring the path node, nodes to which the search can proceed (transit) within a predetermined cost from the path node, for example. As described in (3)(B), in response to a path node (v*) being specified, the extraction operation 51 may extract one or more candidate nodes (set $V_{SUCC} \subset V$) adjacent to the specified path node (v*) from the set (V) of nodes in the input map and add the extracted candidate nodes to the set O as appropriate.

As described in (3)(A), the selection operation 52 may select, based on the cost estimation results from the neural network 50, the next path node with a minimum cost from the set O, add the selected node to the set C, and remove the selected node from the set O. The cost function f(v) for calculating the cost (Formula 1) may be set as appropriate. In other words, the search module 5 may use any search algorithm that finds a path through extraction and selection of nodes, and the search algorithm may be selected as appropriate in each embodiment.

In one example, the selection operation 52 may select the next path node from one or more extracted candidate nodes to minimize the sum of the costs with a predetermined search algorithm. The predetermined search algorithm may be, for example, Dijkstra's algorithm, best-first search, or the A* search algorithm. In other words, the selection operation 52 may be designed to use a known search algorithm. This reduces the effort in designing the search module 5. Each algorithm may include a variant algorithm (an algorithm derived from the original algorithm) in addition to the original algorithm. For example, the predetermined search algorithm may include a variant Dijkstra's algorithm, a variant best-first search, and a variant A* search algorithm. For example, A* search algorithms may include, other than the original A* search algorithm, variant A* search algorithms such as weighted A* (a = 1 and b > 1 in Formula 1) and bidirectional A* (finding a path from both the start node and the goal node).

The output from the neural network 50 (in other words, the estimation result 60) may accordingly derive the value of the cost function f(v) in Formula 1 for each node in the input map. In one example, the cost function f(v) (Formula 1) for each node may be replaced by Formula 2 below.

$$ f(v) = a \cdot \sum_{m \in P(v,v_s)} \phi(m) + b \cdot h(v, v_g) \tag{2} $$

where $\varphi(m)$ is the cost of a node m estimated by the neural network 50, and $P(v, v_s)$ is a series (set) of nodes with the minimum cost from the start node $v_s$ to a node v. The series of nodes ($P(v, v_s)$) may be sequentially updated, when a path node is selected through the selection operation 52 and then candidate nodes are extracted through the extraction operation 51, by storing the information about the path node as the parent node of the candidate nodes in the form of, for example, a linked list. The values of a and b may be determined as appropriate for the algorithm being used. In the formula, $h(v, v_g)$ is the estimated cost to be used to travel from the node v to the goal node $v_g$ When a is non-zero, the cost $h(v, v_g)$ may be computed without using the estimation results from the neural network 50. For example, the cost $h(v, v_g)$ may be computed with a known index such as a Euclidean distance or a Manhattan distance from the node v to the goal node $v_g$. In another example, the cost $h(v, v_g)$ may be computed using the estimation results from the neural network 50, similarly to the $\varphi(m)$ term. In this case, the cost $h(v, v_g)$ may be computed as, for example, the sum of the costs $\varphi(m)$ for the nodes on the straight line from the node v to the goal node $v_g$. In still another example, the cost $h(v, v_g)$ may be computed as a maximum, a minimum, or a median of the costs $\varphi(m)$ for the nodes on the straight line from the node v to the goal node $v_g$. The search module 5 can thus find the path with a minimum cost through the extraction operation 51 and the selection operation 52 by using the estimation results obtained with the neural network 50. In the example described below, for simplicity, the original A* search algorithm or a variant A* search algorithm is used as the search algorithm, and the cost $h(v, v_g)$ is computed without using the estimation results from the neural network 50.

In one example of the search module 5, the map includes a two-dimensional binary image, and the cost value is in the range of [0, 1]. In this case, the neural network 50 may include, for example, a sigmoid function in the output layer to output the cost estimation result for each node (each pixel) in a two-dimensional image (each pixel value is in the range of [0, 1]). The map (binary image) may include obstacle nodes having a value of 0 and movable nodes having a value of 1. The start node $v_s$ may be represented by a binary image with the value of the start node $v_s$ being 1 and the values of the other nodes being 0. Similarly, the goal node $v_g$ may be represented by a binary image with the value of the goal node $v_g$ being 1 and the values of the other nodes being 0. Each of the set C and the set O may also be represented by a binary image with the values of the nodes included in the corresponding set being 1 and the values of the other nodes being 0. In this case, the selection operation 52 may be written as Formula 3 below.

$$v^* = argmax_n \left( \frac{\exp\left(-\frac{f(n)}{\tau}\right) \cdot O(n)}{\sum_m \exp\left(-\frac{f(m)}{\tau}\right) \cdot O(n)} \right) \tag{3}$$

where O(n) ($\in \{0, 1\}$) is the value of a node n in the set O, and $\tau$ is a temperature parameter and may be adaptively determined by the size of the map. In one example, $\tau$ may be substituted with the square root of a map size S. The operation in Formula 3 allows selection of the node with the minimum f from the nodes in the set O. The node v* in Formula 3 can be represented by a binary image (one-hot map) with the value of the node selected by argmax being 1 and the values of the other nodes being 0. With this selection operation 52, the set C may be updated using Formula 4 below. The set O may be updated using Formula 5 below.

$$C \leftarrow C + v^* \tag{4}$$

$$O \leftarrow O - v^* \tag{5}$$

Before the start of the search, the binary image representing the set C is initialized to have the values of all nodes being 0, and the binary image representing the set O represents the start node $v_s$. With the update using Formula 4 above, the set C is represented by a binary image with the examined nodes having a value of 1 and the unexamined nodes having a value of 0. In other words, the set C after the search is represented by a binary image obtained by summing up all the nodes v* obtained in the search process. The extraction operation 51 may be written as Formula 6 below. Through this extraction operation 51, the set O may be updated using Formula 7 below.

$$V_{succ} = (v^* * N) \odot I \odot (1 - O) \odot (1 - C) \tag{6}$$

$$O \leftarrow O + V_{succ} \tag{7}$$

In Formula 6, N is a filter representing being adjacent. For example, for filtering four adjacent nodes, the filter N may be [[0, 1, 0], [1, 0, 1], [0, 1, 0]]. For filtering eight adjacent nodes, the filter N may be [[1, 1, 1], [1, 0, 1], [1, 1, 1]]. The operator * is a convolution operation, I is an input map (a binary image with obstacle nodes having a value of 0 and movable nodes having a value of 1), and the operator ¥odot is the Hadamard product (element-wise product). The extraction operation 51 using Formula 7 extracts, from the nodes adjacent to the node v* selected as the next path node, a node not included in the examination candidates (the set O) and that has not been examined (set C), and adds such a node to the set O.

The forward propagation operation with the second calculation module, including the extraction operation 51 and the selection operation 52, may be described as the processing (i) to (iii) below.

(i) The selection operation 52 (Formula 3) is performed.
(ii) The set C is updated using Formula 4. When the node v* to be added to the set C is the goal node $v_g$, the pathfinding ends.
(iii) The extraction operation 51 (Formula 6) and the update of the set O using Formulas 5 and 7 are performed, and the processing returns to (i).

This forward propagation operation with the second calculation module is performed after the forward propagation operation with the neural network 50 (first calculation module). When a binary image is used as a map, the neural network 50, the extraction operation 51, and the selection operation 52 may be defined as described above by default.
Subsequently, the controller 11 trains the search module 5 on each training data pair 3 to find, in response to an input of the training map 31 as an input map, a path that fits the ground truth for the recommended path indicated by the true information 32. The training process may include stochastic gradient descent and mini-batch gradient descent.

In the training process, the controller 11 first performs, for example, trial pathfinding on the training map 31 in each training data pair 3 using the search module 5. More specifically, the controller 11 inputs the training map 31 in each training data pair 3 into the input layer 501 of the neural network 50. For a neural network 50 that can further receive an input of information about at least one of the start node or the goal node, the controller 11 further inputs, into the input layer 501, information about at least one of the start node S1 or the goal node G1 in the training map 31 together with the training map 31. The controller 11 then performs a forward propagation operation with the neural network 50 (first calculation module). Through the operation, the controller 11 obtains, from the output layer 503, the cost estimation result 60 for each node in the training map 31. The controller 11 then uses the cost estimation results 60 from the neural network 50 to perform a forward propagation operation with the second calculation module. More specifically, the controller 11 prepares the set O and the set C and empties (in other words, initializes) each of the set O and the set C as described in (1) and (2). The controller 11 sets the start node S1 as the first path node by adding the start node S1 to the set O. The controller 11 then uses the estimation results 60 as described above and iterates the extraction operation 51 and the selection operation 52 until the goal node G1 is selected as a path node. For example, for a search module 5 using the above binary image, the controller 11 performs the process in (i) to (iii) described above. With these series of forward propagation operations (trial search), the controller 11 can obtain the pathfinding result 62 (in other words, the set C) for the training map 31. In the forward propagation operation, the controller 11 performs the extraction operation 51 and the selection operation 52 without any additional operation.

The controller 11 then computes an error between the obtained pathfinding result 62 (set C) and the ground truth for the recommended path indicated by the true information 32 associated with the input training map 31. The error (loss) may be computed with a loss function. The loss function used for computing such an error may be of any type selected as appropriate in each embodiment. In one example, both the pathfinding result 62 and the true information 32 may be images. In this case, the controller 11 may compute the error (difference) between the two images using, for example, an index for evaluating the identity of the images such as Hamming distance, L1 distance, or L2 distance as a loss function. In other words, the loss function evaluates, as an error, a node on the recommended path being not included in the pathfinding result 62 and a node other than nodes in the recommended path being included in the pathfinding result 62. More specifically, for a search module 5 using binary images as in the example and the true information 32 and the pathfinding result 62 being represented as binary images, an error L may be written as Formula 8 below.

$$L = \frac{1}{N} \sum_{n} |C(n) - Y(n)|$$

(8)

where C(n) ($\in \{0, 1\}$) is the value of a node n in the set C, and Y(n) is the value of the node n in the binary image representing the true information 32. In the binary image, the nodes on the recommended path may have a value of 1, and the other nodes may have a value of 0.

Subsequently, the controller 11 computes the gradient of the computed error. The controller 11 computes, by backpropagation, an error in the value of each operation parameter using the computed gradient of the error from the layer on the output end. For a search module 5 using the binary images as in the above example, the set C can be written as Formula 9 below. The operation to backpropagate the gradient of the error may thus be written as Formula 10 below.

$$C = \sum_{t} v_t^*$$

(9)

$$\frac{\partial L}{\partial \theta} = \frac{\partial L}{\partial C(n)} \frac{\partial C(n)}{\partial \theta}$$

$$= \sum_t \frac{\partial L}{\partial v_t^*(n)} \frac{\partial v_t^*(n)}{\partial \theta} \tag{10}$$

$$= \sum_t \frac{\partial L}{\partial v_t^*(n)} \frac{\partial v_t^*(n)}{\partial f(n)} \frac{\partial f(n)}{\partial \phi(n)} \frac{\partial \phi(n)}{\partial \theta}$$

where v*t is the node selected at t-th step during the search with (i) to (iii) described above, and θ is an operation parameter for the neural network 50.

In the operation to backpropagate the error, the controller 11 replaces the extraction operation 51 and the selection operation 52 with differentiable alternative operations. The controller 11 differentiates the resulting alternative operations to compute the approximate gradients corresponding to the differential calculations for the extraction operation 51 and the selection operation 52. In one example, the alternative operation for the extraction operation 51 may be a convolution operation with a filter N as the kernel. The alternative operation V* for the selection operation 52 may be the operation written as Formula 11 (an example using straight-through softmin with temperature).

$$V^* = argmax_n \left( \frac{\exp\left(-\frac{f(n)}{\tau}\right)}{\sum_m \exp\left(-\frac{f(m)}{\tau}\right)} \right) \tag{11}$$

$$\frac{\partial F}{\partial f(n)} = \begin{cases} F(-f(n))\bigl(1 - F(-f(m))\bigr) & n \neq m \\ -F(-f(n))F(-f(m)) & n = m \end{cases} \tag{12}$$

When the alternative operation in Formula 11 is $argmax_n(F(-f(n)))$, an operation $\delta v_t^*(n)/\delta f(n)$ in Formula 10 can be written as $\delta F/\delta f(n)$. V* can be an array of selected nodes with a value of 1 and other nodes with a value of 0. For the n-th element of V*, the gradient for the m-th element of f can be computed using Formula 12. When the $\varphi(m)$ term in Formula 2 is the g term in Formula 1, $\delta f(n)/\delta\varphi(n)$ can be expressed by the product of $\delta f(n)/\delta g(n)$ and $\delta g(n)/\delta\varphi(n)$. Of these, the approximate gradient (in other words, the term $\delta g(n)/\delta\varphi(n)$) can be computed by replacing the extraction operation 51 with the above alternative operation in tracing the path P. Thus, these replacements allow the controller 11 to compute the approximate gradient of the terms $\delta v_t^*(n)/\delta f(n)$ and $\delta f(n)/\delta\varphi(n)$ in Formula 10, which are non-differentiable unless being replaced with alternative operations. The gradient $(\delta L/\delta\theta)$ can thus be computed. The controller 11 can then use the computed gradient $(\delta L/\delta\theta)$ to compute an error in the values of the operation parameters for each of the layers 501 to 503.

The controller 11 then updates the value of each operation parameter for each of the layers 501 to 503 based on the computed error. The values of the operation parameters may be updated by the frequency adjusted based on the learning rate. The learning rate may be provided with an indication by an operator or provided as a value preset in a program.

The controller 11 adjusts, for each training data pair 3, the value of each operation parameter for each of the layers 501 to 503 with the above series of updating processes to reduce the sum of the computed errors (to minimize the error L in the above example). For example, until the predetermined condition is satisfied, such as an operation being performed a predetermined number of times or the sum of computed errors falling below a threshold, the controller 11 may iteratively adjust the value of each operation parameter with the above series of updating processes.

The controller 11 can generate, as a result of the machine learning (e.g., as a result of optimizing the parameter values to minimize the error L), the trained search module 5 capable of performing an intended pathfinding task corresponding to the used training data pair 3. In other words, the above machine learning allows the search module 5 to find the recommended path and allows the neural network 50 to estimate the cost for each node to reduce redundant search.

After completing the machine learning process, the controller 11 advances the processing to subsequent step S103.

Step S103

In step S103, the controller 11 operates as the storing unit 113 and generates information about the trained search module 5 generated through machine learning as the training-result data 125. The controller 11 then stores the generated training-result data 125 into a predetermined storage area.

The predetermined storage area may be, for example, the RAM in the controller 11, the storage 12, an external storage, a storage medium, or a combination of these. The storage medium is, for example, a CD or a DVD. The controller 11 may store the training-result data 125 into the storage medium through the drive 17. The external storage may be, for example, a data server, such as a network attached storage (NAS). In this case, the controller 11 may use the communication interface 13 to store the training-result data 125 into the data server through a network. The external storage may be connected to the model generation apparatus 1 with the external interface 14.

After storing the training-result data 125, the controller 11 ends the procedure performed by the model generation apparatus 1 in the present operation example.

The generated training-result data 125 may be provided to the pathfinding apparatus 2 at any selected time. For example, the controller 11 may transfer the training-result data 125 to the pathfinding apparatus 2 in step S103 or in a step separate from step S103. The pathfinding apparatus 2 may receive the transferred data to obtain the training-result data 125. In another example, the pathfinding apparatus 2 may use the communication interface 23 to access the model generation apparatus 1 or the data server through a network and obtain the training-result data 125. In still another example, the pathfinding apparatus 2 may obtain the training-result data 125 through the storage medium 92. In still another example, the pathfinding apparatus 2 may prestore the training-result data 125.

The controller 11 may further update or newly generate the training-result data 125 by regularly or irregularly repeating the processing in steps S101 to S 103 above. During the iterated processing, at least parts of the training data pairs 3 used for the machine learning may undergo, for example, changes, modifications, additions, and deletions as appropriate. The controller 11 may provide the updated or newly generated training-result data 125 to the pathfinding apparatus 2 in any manner to update the training-result data 125 stored by the pathfinding apparatus 2.

Pathfinding Apparatus

FIG. 8 is a flowchart of an example procedure for a pathfinding task performed by the pathfinding apparatus 2 according to the present embodiment. The procedure performed by the pathfinding apparatus 2 described below is an example of a pathfinding method. The procedure performed by the pathfinding apparatus 2 described below is a mere example, and each of its steps may be modified in any possible manner. In the procedure below, steps may be eliminated, replaced, or added as appropriate in each embodiment.

Step S201

In step S201, the controller 21 operates as the map obtainer 211 and obtains a target map 221.

The target map 221 is the same type of data as the training map 31. In some cases, the target map 221 may be identical to the training map 31. The target map 221 may be obtained with any device. In one example, a target map 221 being an image may be obtained with a camera. The controller 21 may directly obtain the target map 221 from the device through, for example, the external interface 24. The controller 21 may indirectly obtain the target map 221 from the device through another computer.

The controller 21 obtains information about the start node S2 and the goal node G2 as appropriate together with the target map 221. The information about the nodes (S2 and G2) may be included in the target map 221. In some embodiments, the information about the nodes (S2 and G2) may be, for example, specified by the user or obtained from results of any information processing (e.g., measurement results of the current location) After obtaining the target map 221 and the information about the nodes (S2 and G2), the controller 21 advances the processing to subsequent step S202.

Step S202

In step S202, the controller 21 operates as the searcher 212 and defines the trained search module 5 by referring to the training-result data 125. The controller 21 then uses the trained search module 5 to find a recommended path with a minimum cost from the start node S2 to the goal node G2 in the obtained target map 221.

The search operation may be the same as the operation performed in the phase of the trial search in the training process of the machine learning described above. In other words, the controller 21 inputs the obtained target map 221 into the input layer 501 of the trained neural network 50. For the neural network 50 further receiving an input of information about at least one of the start node or the goal node, the controller 21 further inputs information about at least one of the start node S2 or the goal node G2 into the input layer 501. The controller 21 then performs a forward propagation operation with the trained neural network 50. Through the operation, the controller 21 obtains, from the output layer 503, the cost estimation result 223 for each node in the target map 221. The controller 21 then prepares the set O and the set C and empties each set as described in (1) and (2). The controller 21 sets the start node S2 as the first path node by adding the start node S2 to the set O. The controller 21 then iterates, using the obtained estimation results 223, the extraction operation 51 and the selection operation 52 until the goal node G2 is selected as a path node.

With these series of operations, the controller 21 can obtain the result 225 of finding a recommended path with a minimum cost for the target map 221. In one example, the controller 21 may refer to the set C to obtain a recommended path with a minimum cost by tracing the parent nodes (preceding path nodes) successively from the goal node G2 to the start node S2. After obtaining the pathfinding result 225, the controller 21 advances the processing to step S203.

Step S203

In step S203, the controller 21 operates as the output unit 213 and outputs information about the result 225 of finding the recommended path.

The destination and the details of the output information may be determined as appropriate in each embodiment. For example, the controller 21 may output the pathfinding result 225 obtained in step S202 to the output device 26 without further processing. The output format may be selected from, for example, images and sound as appropriate. For example, the controller 21 may perform information processing based on the obtained pathfinding result 225. The controller 21 may then output the processed information as information about the pathfinding result 225. The processed information being output may include, for example, the operation of a control target device being controlled in accordance with the pathfinding result 225. The information may be output to, for example, the output device 26, an output device included in another computer, or the control target device.

In one example, the information about the pathfinding result 225 may include navigation in accordance with the resulting path. The navigation may include encouraging the user to move along the resulting path with, for example, images or sound. In some embodiments, the navigation may include controlling a target device to move along the resulting path. This allows travel guidance or motion control to be performed in accordance with the obtained pathfinding result 225.

After outputting the information about the pathfinding result 225, the controller 21 ends the procedure performed by the pathfinding apparatus 2 in the present operation example. The pathfinding apparatus 2 may perform the series of information processing steps S201 to S203 at any selected time (e.g., in response to an instruction from the user, or upon controlling the motion of the target device). The pathfinding apparatus 2 may iteratively perform the series of information processing steps S201 to S203 to iteratively perform the above pathfinding task.

Features

As described above, in step S102, the model generation apparatus 1 according to the present embodiment trains both the first calculation module and the second calculation module (the extraction operation 51 and the selection operation 52) through machine learning, rather than the first calculation module (neural network 50) alone. This reduces the work time for and the burden of preparing the true information 32 in each training data pair 3 obtained in step S101. The structure according to the present embodiment can thus reduce the effort in generating the trained search module 5.

As the search module 5 is trained to optimally find the recommended path in the machine learning process in step S102, the neural network 50 is indirectly trained based on the recommended path indicated by the true information 32 to estimate a high cost in areas that reduce search efficiency. The pathfinding apparatus 2 according to the present embodiment uses the cost estimation results 223 from the trained neural network 50 in the processing in step S202 to efficiently perform the pathfinding task. A search module 5 using the A* search algorithm as its search algorithm can increase the efficiency of finding the path with a minimum cost. A search module 5 using best-first search as its search algorithm can increase the probability of finding the path with a minimum cost by using the cost estimation result for each node output from trained neural network 50.

The model generation apparatus 1 according to the present embodiment replaces, in the phase of backpropagation in the machine learning in step S102, the extraction operation 51 and the selection operation 52 in the search module 5 with alternative operations and uses the approximate gradients computed by differentiating the alternative operations as the gradients of the extraction operation 51 and the selection operation 52. This replacement allows the search module 5 including the non-differentiable second calculation module to be trained through machine learning appropriately. The generated search module 5 trained through machine learning can thus perform the above pathfinding task efficiently.

4. Modifications

The embodiment of the present invention described in detail above is a mere example of the present invention in all respects. The embodiment may be variously modified or altered without departing from the scope of the present invention. For example, the embodiment may be modified in the forms described below. In the modifications described below, the same reference numerals denote the same components in the above embodiment, and the operations and the components that are the same as those in the above embodiment will not be described. The modifications described below may be combined as appropriate. 4.1

The pathfinding system 100 according to the above embodiment may be used in any situation in which a path is to be found in a map. The pathfinding system 100 according to the above embodiment may be used in specific situations in which, for example, a recommended path is to be found for a movable body or a recommended trajectory is to be found for a robotic device. Such specific situations will be described below.

(A) Finding Recommended Path for Movable Body

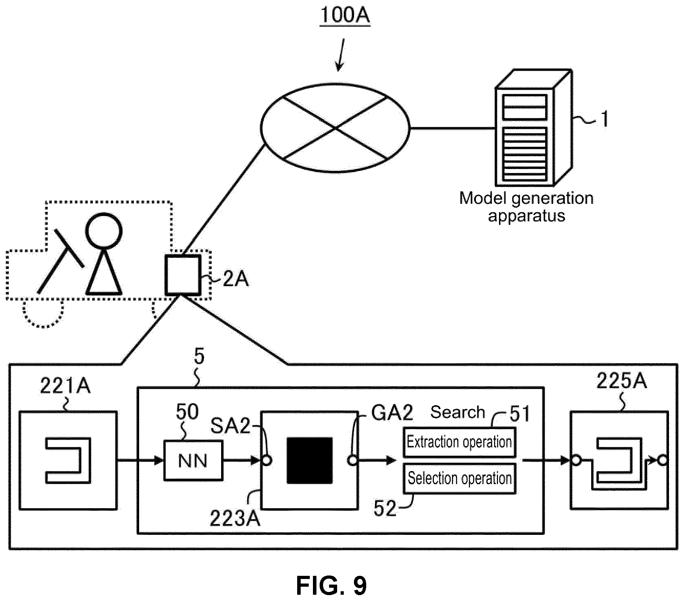

FIG. 9 is a schematic diagram of a first specific example situation in which a guidance system 100A is used. In the first specific situation, the structure in the above embodiment is used to find a recommended path for a movable body. The guidance system 100A in the first specific situation includes the model generation apparatus 1 and a guidance apparatus 2A. The guidance apparatus 2Ais an example of the above pathfinding apparatus 2.

The maps (a training map and a target map) in the first specific situation include a range in which the movable body is allowed to travel. Each node in the maps may correspond to any location in a spatial area (e.g., a road, a public square, or a space in a building) in which the movable body is allowed to travel. The maps may include images. In this case, the maps may be obtained with a camera as appropriate. The camera may be of any type, for example, a common RGB camera, an infrared camera, or a depth camera. The camera may also be a range sensor such as a light detection and ranging (Lidar) sensor. In one example, the maps may be aerial photographs, photographs taken with a drone, or other real images obtained by photographing a spatial area in which the movable body can travel. In some embodiments, the maps may be any images representing the spatial area such as a cartographic map or a plan sketch. In some embodiments, the maps may be binary images representing the movable areas and immovable areas in the spatial area. The movable body may be a movable machine such as a vehicle or a drone. In some embodiments, the movable body may be a person. In the example of FIG. 9, the movable body is a vehicle. Except these, the structure in the first specific situation is the same as the structure in the above embodiment.

Model Generation Apparatus

In the first specific situation, the model generation apparatus 1 can generate a trained search module 5 capable of finding a recommended travel path for a movable body, with the same procedure as in the above embodiment.

More specifically, in step S101, the controller 11 obtains multiple training data pairs each including a combination of a training map and true information. The training map includes the range in which the movable body is allowed to travel. The true information indicates the travel path recommended for the movable body as the recommended path. In step S102, the controller 11 trains the search module 5 through machine learning using the obtained training data pairs. In the same manner as in the above embodiment, in the phase of backpropagation in the machine learning, the controller 11 uses the approximate gradients computed by differentiating the alternative operations as the resulting differentiation calculations for the extraction operation 51 and the selection operation 52. The machine learning allows generation of the trained search module 5 capable of finding the recommended path for the movable body. In step S103, the controller 11 stores training-result data indicating the search module 5 generated by training into a predetermined storage area. The training-result data may be provided to the guidance apparatus 2A at any selected time.

Guidance Apparatus

The guidance apparatus 2A may have the same hardware and software configurations as the pathfinding apparatus 2 according to the above embodiment. In the first specific situation, the guidance apparatus 2Acan find the recommended travel path for a movable body with the same procedure as with the above pathfinding apparatus 2.

More specifically, in step S201, a controller in the guidance apparatus 2A operates as a map obtainer and obtains a target map 221A that includes the range in which the movable body is allowed to travel (in other words, the range in which the movable body can travel). The target map 221A may be obtained with any method selected as appropriate in each embodiment. In one example, a travel path may be planned for a movable body that travels on the ground. In this case, the target map 221A may be an image obtained by a drone photographing the area in which the movable body is located and the surroundings of the area.

The controller also obtains information about a start node SA2 and a goal node GA2 as appropriate. The start node SA2 may correspond to the current location of the movable body or an intended start point. The goal node GA2 may correspond to the destination of the movable body. In one example, information about the nodes (SA2 and GA2) may be specified by the user. In another example, the guidance apparatus 2A may include a measuring device such as the global positioning system (GPS). In this case, the information about the start node SA2 may be obtained from the measurement results of the current location from the measuring device. For a target map 221Abeing an image including a destination (e.g., a specific building or a location) toward which the movable body is traveling, information about the goal node GA2 may be obtained from the result of image identification performed on the target map 221A. The image identification may be performed with any method. The target map 221A may be obtained as appropriate after the start node SA2 and the goal node GA2 are identified and to include the start node SA2 and the goal node GA2.

In step S202, the controller operates as a searcher and uses the trained search module 5 to find a recommended path for the movable body to travel from the start node SA2 to the goal node GA2 in the obtained target map 221A. More specifically, the controller uses the trained neural network 50 to estimate the cost for each node in the target map 221A. Through the operation with the trained neural network 50, the controller obtains a cost estimation result 223A for each node. The controller prepares the set O and the set C and empties the set O and the set C. The controller sets the start node SA2 as the first path node by adding the start node SA2 to the set O. The controller then iterates, using the obtained estimation results 223A, the extraction operation 51 and the selection operation 52 until the goal node GA2 is selected as a path node. This allows the controller to obtain a result 225A of finding a recommended path with a minimum cost from the start node SA2 to the goal node GA2.

In step S203, the controller operates as an output unit and outputs information about the result 225A of finding the recommended path. In one example, the controller may output the obtained recommended path without further processing. In another example, the controller may navigate, based on the obtained pathfinding result 225A, along the resulting recommended path. The navigation may be performed with, for example, images or sound. For the movable body being a machine such as a vehicle or a drone, the navigation may include outputting a message or information to encourage the user to manually operate the machine to travel along the recommended path. In some embodiments, the guidance apparatus 2Amay control the motion of the machine. In this case, the navigation may include controlling the motion of the machine to travel along the resulting recommended path. For the movable body being a person, the navigation may include outputting a message or information to encourage the person to travel along the recommended path.

Features

The model generation apparatus 1 in the first specific situation can reduce the effort in generating the trained search module 5 capable of finding the recommended path for a movable body. The guidance apparatus 2Acan efficiently find the recommended path for the movable body by using the trained search module 5. The model generation apparatus 1 can appropriately train the search module 5 through machine learning by replacing the extraction operation 51 and the selection operation 52 in the backpropagation phase in the machine learning. This allows the search module 5 to be trained and generated appropriately to efficiently perform the task of finding the recommended path for the movable body.

(B) Finding Recommended Trajectory for Robotic Device

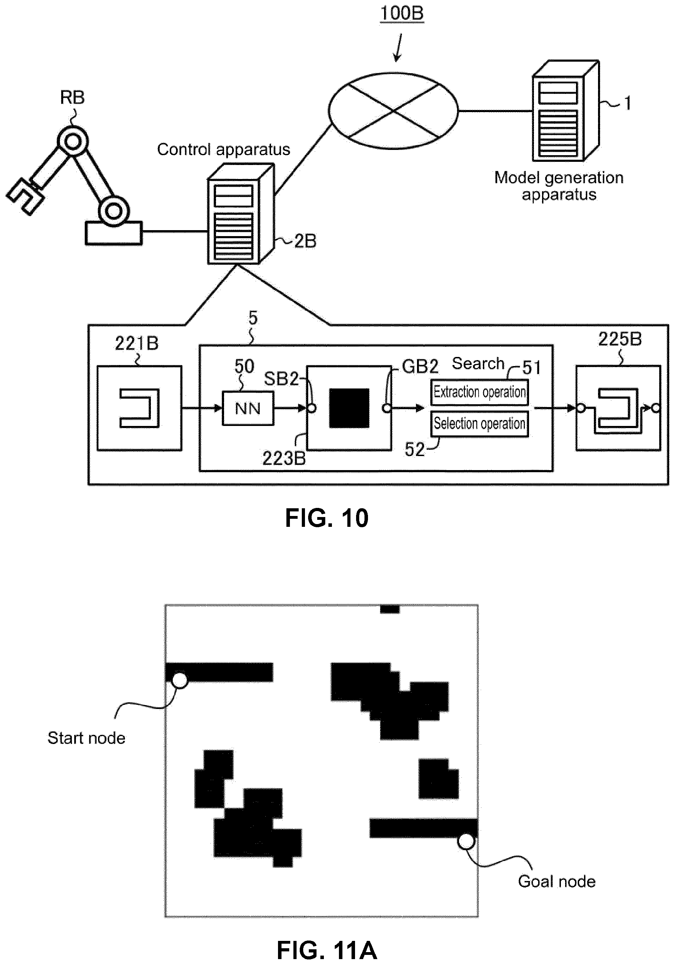

FIG. 10 is a schematic diagram of a second specific example situation in which a control system 100B is used. In the second specific situation, the structure in the above embodiment is used to find a recommended path for a robotic device RB. The control system 100B in the second specific situation includes the model generation apparatus 1 and a control apparatus 2B. The control apparatus 2B is an example of the above pathfinding apparatus 2.

The maps (a training map and a target map) in the second specific situation include the range in which the robotic device RB is allowed to be driven. Each node in the maps may correspond to any location in the work area of the robotic device RB. The maps may include images. In this case, the maps may be obtained with a camera as appropriate. The camera may be of any type. In one example, the maps may be real images obtained by photographing the spatial area in which the robotic device RB is drivable. In some embodiments, the maps may be binary images representing the movable areas and immovable areas in the spatial area. The maps may be obtained by modeling the work environment of the robotic device RB. The robotic device RB may be, for example, an industrial robot (e.g., a robot arm) or an autonomous robot. Except these, the structure in the second specific situation is the same as in the above embodiment.

Model Generation Apparatus

In the second specific situation, the model generation apparatus 1 can generate a trained search module 5 capable of finding the recommended motion path for the robotic device RB, with the same procedure as in the above embodiment.

More specifically, in step S101, the controller 11 obtains multiple training data pairs each including a combination of a training map and true information. The training map includes the range in which the robotic device RB is allowed to be driven. The true information indicates the motion path recommended for the robotic device RB as the recommended path. In step S102, the controller 11 trains the search module 5 through machine learning using the obtained training data pairs. In the same manner as in the above embodiment, in the phase of backpropagation in the machine learning, the controller 11 uses the approximate gradients computed by differentiating the alternative operations as the resulting differentiation calculations for the extraction operation 51 and the selection operation 52. The machine learning allows generation of the trained search module 5 capable of finding the recommended path for the robotic device RB. In step S103, the controller 11 stores training-result data indicating the search module 5 generated by training into a predetermined storage area. The training-result data may be provided to the control apparatus 2B at any selected time.

Control Apparatus

The control apparatus 2B may have the same hardware and software configurations as the pathfinding apparatus 2 according to the above embodiment. The robotic device RB to be driven may be connected to the control apparatus 2B with a communication interface or an external interface. In the second specific situation, the control apparatus 2B can find the recommended motion path for the robotic device RB, with the same procedure as with the above pathfinding apparatus 2.

More specifically, in step S201, a controller in the control apparatus 2B operates as a map obtainer and obtains a target map 221B that includes the range in which the robotic device RB is allowed to be driven. The target map 221B may be obtained with any method selected as appropriate in each embodiment. In one example, the target map 221B may be an image obtained by photographing the work area of the robotic device RB with a camera mounted on the robotic device RB or a camera installed around the robotic device RB. In another example, the target map 221B may be environmental information generated by modeling the environment surrounding the robotic device RB.

The controller obtains information about a start node SB2 and a goal node GB2 as appropriate. The start node SB2 may correspond to the current position of the robotic device RB or an intended start position. For the robotic device RB with an end-effector, the start node SB2 may correspond to the current position of the end-effector or an intended start position. The goal node GB2 may correspond to the goal position of the robotic device RB. The goal position of the robotic device RB may be, for example, the position at which a target object such as a workpiece is located. In one example, the information about the nodes (SB2 and GB2) may be specified by an operator. In another example, the information about the start node SB2 may be obtained based on information about the robotic device (e.g., the current position of the end-effector). The information about the goal node GB2 may be obtained based on set information about the goal position. In still another example, for the target map 221B being an image of the robotic device RB and the target object, the information about the nodes (SB2 and GB2) may be obtained from the results of image identification performed on the target map 221B. The image identification may be performed with any method. The target map 221B may be obtained as appropriate after the start node SB2 and the goal node GB2 are identified and to include the start node SB2 and the goal node GB2.

In step S202, the controller operates as a searcher and uses the trained search module 5 to find the recommended path for the robotic device RB to move from the start node SB2 to the goal node GB2 in the obtained target map 221B. More specifically, the controller uses the trained neural network 50 to estimate the cost for each node in the target map 221B. Through the operation with the trained neural network 50, the controller obtains the cost estimation result 223B for each node. The controller prepares the set O and the set C and empties the set O and the set C. The controller sets the start node SB2 as the first path node by adding the start node SB2 to the set O. The controller then iterates, using the obtained estimation result 223B, the extraction operation 51 and the selection operation 52 until the goal node GB2 is selected as a path node. This allows the controller to obtain a result 225B of finding a recommended path with a minimum cost from the start node SB2 to the goal node GB2.

In step S203, the controller operates as an output unit and outputs information about the result 225B of finding the recommended path. In one example, the controller may output the obtained recommended path without further processing. In another example, the controller may navigate the robotic device RB to be driven along the resulting recommended path based on the obtained pathfinding result 225B. The navigation may be performed with, for example, images or sound. The navigation may include outputting a message or information to encourage an operator to manually drive (in other words, to indicate the motion of) the robotic device RB along the recommended path. In some embodiments, the control apparatus 2B may control the motion of the robotic device RB. In this case, the navigation may include controlling the motion the robotic device RB along the resulting recommended path.

Features

The model generation apparatus 1 in the second specific situation can reduce the effort in generating the trained search module 5 capable of finding the recommended path for the robotic device RB. The control apparatus 2B can efficiently find the recommended path for the robotic device RB by using the trained search module 5. The model generation apparatus 1 can appropriately train the search module 5 through machine learning by replacing the extraction operation 51 and the selection operation 52 in the backpropagation phase in the machine learning. This allows the search module 5 to be trained and generated appropriately to efficiently perform the task of finding the recommended path for the robotic device RB.

(C) Other Considerations

Although the two example situations are described above, the structure in the above embodiment can be used in other situations. For example, the pathfinding system 100 according to the above embodiment may be used to find a path using transportation facilities (e.g., airplanes, railways, or buses). In this case, the maps (the training map and the target map) include an appropriate range of the transportation network for a transportation facility. Each node in the maps may correspond to any geographic location such as a transportation hub (e.g., a train station). The true information may indicate the path recommended for traveling by transportation as the recommended path. This allows the model generation apparatus 1 to generate a trained search module 5 capable of finding the path recommended for traveling by transportation. The pathfinding apparatus 2 can also use the trained search module 5 to find the path recommended for traveling by transportation.

4.2

The architecture of the neural network 50 is not limited to the architecture in the above embodiment, and may be changed as appropriate in each embodiment. For example, each neuron may be connected to a particular neuron in an adjacent layer or to a neuron in a layer other than an adjacent layer. The neurons may be connected in any manner determined as appropriate in each embodiment. The intermediate layers 502 may be eliminated. The neural network 50 may include other layers such as convolutional layers, pooling layers, normalized layers, and dropout layers. The neural network 50 may be another neural network such as a convolutional neural network, a recurrent neural network, or a graph neural network.

In the above embodiment, the input into and the output from the neural network 50 may be in any format determined as appropriate in each embodiment. For example, the neural network 50 may further receive an input of information other than maps. For example, the neural network 50 may output information other than the cost estimation result for each node.

In the above embodiment, the extraction operation 51 and the selection operation 52 may be modified as appropriate in each embodiment. For example, the selection operation 52 may be performed using Formula 13 or 14 below. The alternative operation of the selection operation 52 may thus be an operation in which O(n) is deleted from each of Formulas 13 and 14, similarly to the relationship in Formulas 3 and 11.

$$v^* = argmax_n \left( \frac{\exp\left(-f(n)\right) \cdot O(n)}{\sum_m \exp\left(-f(m)\right) \cdot O(n)} \right) \qquad (13)$$

$$v^* = argmax_n \left( \frac{\exp\left(-w(n)f(n)\right) \cdot O(n)}{\sum_m \exp\left(-w(n)f(n)\right) \cdot O(n)} \right) \qquad (14)$$

where w(n) is a non-negative (greater than or equal to 0) weight.

5. Experimental Examples

To verify the effectiveness of the replacement in the backpropagation phase and the search using the cost estimation results obtained with the neural network, search modules in a working example and a comparative example were generated as described below. The present invention is not limited to the working example described below.

The trained search module in the working example was generated in the same manner as in the above embodiment. The search module is capable of finding the shortest path from a start node to a goal node in a binary image map. The neural network was U-Net, which includes 10 layers on the input end of VGG-16 Network (a network published in the reference, https:/pytorch.org/hub/pytorch#vision#vgg/). The input was a two-channel map obtained by combining an input map (with the obstacle nodes having a value of 0 and the other nodes having a value of 1) and a map with the start node and the goal node having a value of 1 and the other nodes having a value of 0. Using a sigmoid function as the activation function in the output layer, the neural network was designed to output a normalized value in the range of [0, 1] as the estimated cost for each node. For the training data pairs, samples used are published in the reference, https://github.com/mohakbhardwaj/motion#planning#datasets. The map size was $32 \times 32$. Eight-hundred samples were obtained for each type of obstacle, and search modules were prepared. Each search module was trained on each type of obstacle through machine learning. Adam was used as the optimization algorithm for the machine learning. The learning rate was set to 0.001. The batch size was set to 100. The number of epochs was set to 100. For the alternative operation of the extraction operation, a convolution operation with [[0, 1, 0], [1, 0, 11, [0, 1, 0]] as the kernel was used. The selection operation was performed with the A* search algorithm. A function that computes the linear distance (Manhattan distance) from a node v to a goal node $v_g$ as a cost was used as $h(v, v_g)$. Formula 11 (straight-through softmin with temperature) was used as the alternative operation for the selection operation. The square root of 32 was substituted for $\tau$. The search module in the comparative example was generated, by eliminating the neural network, to find the shortest path using the A* search algorithm with the procedure in (1) to (4) described above. Similarly to the selection operation in the working example, a function that computes the linear distance (Manhattan distance) from a node v to a goal node $v_g$ as a cost was used as $h(v, v_g)$ in the comparative example. Three target maps for evaluation were input into the search modules in the working example and the comparative example to cause the modules to find the shortest path from the start node to the goal node in each target map.

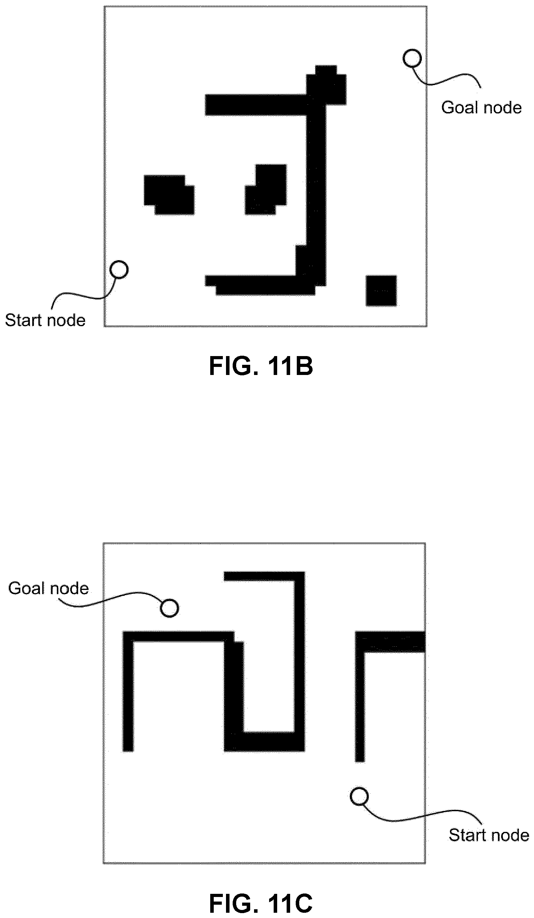

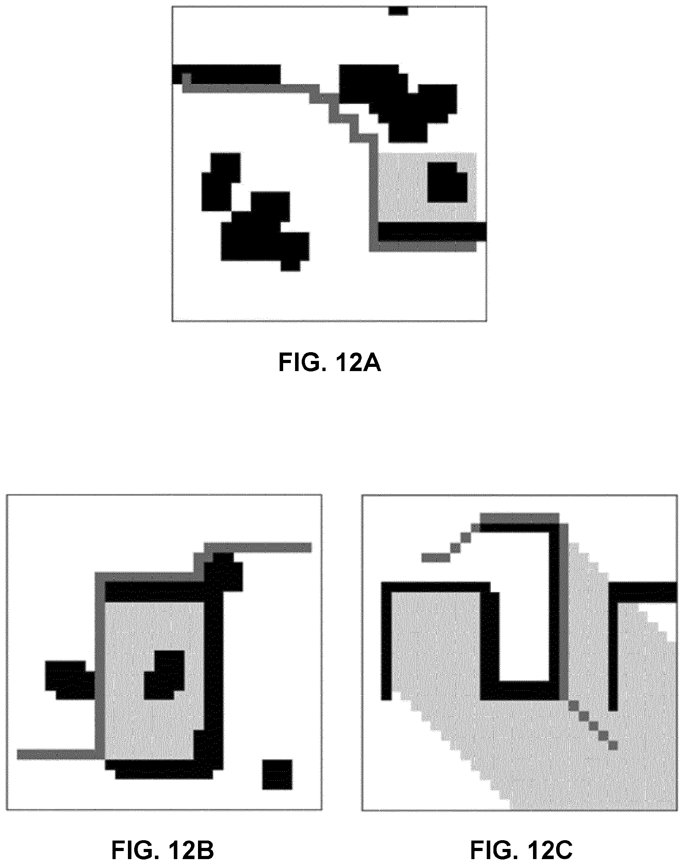

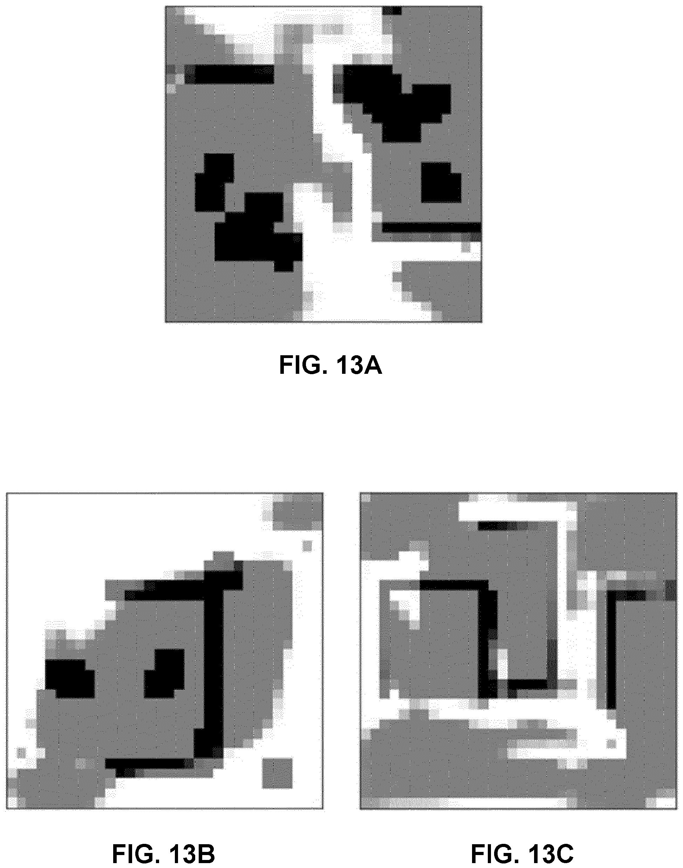

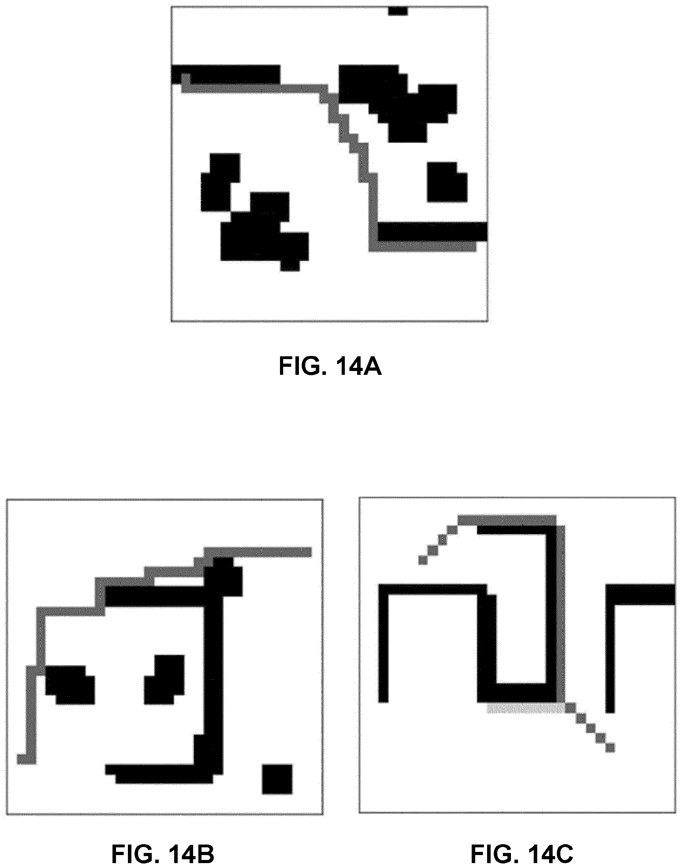

FIGs. 11A to 11C show the target maps used in the evaluation. FIGs. 12A to 12C show the results of pathfinding (dark gray) performed by the search module in the comparative example on the target maps in FIGs. 11A to 11C and show the nodes examined in the pathfinding (set C, light gray). FIGs. 13A to 13C show the cost for each node in the target maps shown in FIGs. 11A to 11C estimated by the neural network in the search module in the working example. FIGs. 14A to 14C show the results of pathfinding (dark gray) performed by the search module in the working example on the target maps shown in FIGs. 11A to 11C and the nodes examined in the pathfinding (light gray).

As shown in FIGs. 14A to 14C, the trained search module in the working example appropriately found the shortest path from the start node to the goal node in the target maps for evaluation. The results indicate that the replacement of the backpropagation phase described above allows the search module including non-differentiable operations to be trained appropriately through machine learning, thus appropriately generating the trained search module capable of finding the recommended path. As shown in FIGs. 12A to 12C and 14A to 14C, the number of nodes examined was fewer in the working example than in the comparative example. As shown in FIGs. 13A to 13C, the trained neural network estimated the cost for each node to be higher for the areas that reduce the search efficiency (in other words, to avoid examining the nodes in the area). The results indicate that the use of the cost estimation result for each node from the neural network trained indirectly in the machine learning can appropriately improve the pathfinding efficiency.

REFERENCE SIGNS LIST

1        model generation apparatus
11       controller
12       storage
13       communication interface
14       external interface
15       input device
16       output device
17       drive
81       model generation program
91       storage medium
111      data obtainer
112      training unit
113      storing unit
125      training-result data

| 2 | pathfinding apparatus |
| 21 | controller |
| 22 | storage |
| 23 | communication interface |
| 24 | external interface |
| 25 | input device |
| 26 | output device |
| 27 | drive |
| 82 | pathfinding program |
| 92 | storage medium |
| 211 | map obtainer |
| 212 | searcher |
| 213 | output unit |
| 221 | target map |
| 3 | training data pair |
| 31 | training map |
| 32 | true information |
| 5 | search module |
| 50 | neural network |
| 501 | input layer |
| 502 | intermediate (hidden) layer |
| 503 | output layer |
| 51 | extraction operation |
| 52 | selection operation |

**Claims**

1. A model generation apparatus, comprising:

   a data obtainer configured to obtain a plurality of training data pairs each including a combination of a training map and true information indicating a recommended path in the training map; and
   a training unit configured to train a search module through machine learning using the plurality of training data pairs,

   the search module including

   a neural network configured to estimate a cost of each of a plurality of nodes in an input map,
   an extraction operation to extract, from the plurality of nodes in the input map, one or more candidate nodes adjacent to a path node, and
   a selection operation to select, based on an estimation result from the neural network, a next path node from the extracted one or more candidate nodes to minimize a sum of the costs for the plurality of nodes,

   the search module being configured to find a path from a start node being a first path node to a goal node through the extraction operation and the selection operation being iterated until the goal node is selected as a path node,
   the machine learning including training the search module on each of the plurality of training data pairs to find a path fitting the recommended path indicated by the true information in response to receiving an input of the training map as the input map,
   in the machine learning, the training unit being configured to perform, in a phase of forward propagation, the extraction operation and the selection operation, and to replace, in a phase of backpropagation, the extraction operation and the selection operation with differentiable alternative operations and differentiate the differentiable alternative operations to compute approximate gradients corresponding to differentiation calculations for the extraction operation and the selection operation.

2. The model generation apparatus according to claim 1, wherein
   the selection operation selects, based on the estimation result from the neural network, the next path node from the extracted one or more candidate nodes to minimize the sum of the costs for the plurality of nodes using a predetermined search algorithm.

3. The model generation apparatus according to claim 2, wherein
the predetermined search algorithm is Dijkstra's algorithm, best-first search, or an A* search algorithm.

4. The model generation apparatus according to any one of claims 1 to 3, wherein

the training map includes a range in which a movable body is allowed to travel, and
the recommended path indicated by the true information is a travel path recommended for the movable body.

5. The model generation apparatus according to any one of claims 1 to 3, wherein

the training map includes a range in which a robotic device is allowed to be driven, and
the recommended path indicated by the true information is a motion path recommended for the robotic device.

6. The model generation apparatus according to any one of claims 1 to 5, wherein the recommended path is a shortest path.

7. The model generation apparatus according to any one of claims 1 to 6, wherein the training map includes an image, and
the plurality of nodes include pixels.

8. The model generation apparatus according to claim 7, wherein
the image includes a real image or a binary image.

9. A pathfinding apparatus, comprising:

a map obtainer configured to obtain a target map;
a searcher configured to find a path from a start node to a goal node in the obtained target map using a search module having been trained,

the search module having been trained being generated through machine learning using a plurality of training data pairs each including a combination of a training map and true information indicating a recommended path in the training map,
the search module including

a neural network configured to estimate a cost of each of a plurality of nodes in an input map,
an extraction operation to extract, from the plurality of nodes in the input map, one or more candidate nodes adjacent to a path node, and
a selection operation to select, based on an estimation result from the neural network, a next path node from the extracted one or more candidate nodes to minimize a sum of the costs for the plurality of nodes,

the search module being configured to find a path from a start node being a first path node to a goal node through the extraction operation and the selection operation being iterated until the goal node is selected as a path node,
the machine learning including training the search module on each of the plurality of training data pairs to find a path fitting the recommended path indicated by the true information in response to receiving an input of the training map as the input map,
in the machine learning, the searcher being configured to perform, in a phase of forward propagation, the extraction operation and the selection operation, and to replace, in a phase of backpropagation, the extraction operation and the selection operation with differentiable alternative operations and differentiate the differentiable alternative operations to compute approximate gradients corresponding to differentiation calculations for the extraction operation and the selection operation; and
an output unit configured to output information about a result of finding the path for the target map.

10. The pathfinding apparatus according to claim 9, wherein

the target map includes a range in which a movable body is allowed to travel, and

the searcher uses the search module having been trained to find a recommended path for the movable body to travel from the start node to the goal node in the obtained target map.

11. The pathfinding apparatus according to claim 9, wherein

the target map includes a range in which a robotic device is allowed to be driven, and
the searcher uses the search module having been trained to find a recommended path for the robotic device to move from the start node to the goal node in the obtained target map.

12. The pathfinding apparatus according to any one of claims 9 to 11, wherein
the information about the result of finding the path includes navigation in accordance with the path having been found.

13. A model generation method implementable with a computer, the method comprising:

obtaining a plurality of training data pairs each including a combination of a training map and true information indicating a recommended path in the training map; and
training a search module through machine learning using the plurality of training data pairs,

the search module including

a neural network configured to estimate a cost of each of a plurality of nodes in an input map,
an extraction operation to extract, from the plurality of nodes in the input map, one or more candidate nodes adjacent to a path node, and
a selection operation to select, based on an estimation result from the neural network, a next path node from the extracted one or more candidate nodes to minimize a sum of the costs for the plurality of nodes,

the search module being configured to find a path from a start node being a first path node to a goal node through the extraction operation and the selection operation being iterated until the goal node is selected as a path node,
the machine learning including training the search module on each of the plurality of training data pairs to find a path fitting the recommended path indicated by the true information in response to receiving an input of the training map as the input map,
in the machine learning, the training the search module including performing, in a phase of forward propagation, the extraction operation and the selection operation, and replacing, in a phase of backpropagation, the extraction operation and the selection operation with differentiable alternative operations and differentiating the differentiable alternative operations to compute approximate gradients corresponding to differentiation calculations for the extraction operation and the selection operation.

14. A model generation program for causing a computer to perform operations comprising:

obtaining a plurality of training data pairs each including a combination of a training map and true information indicating a recommended path in the training map; and
training a search module through machine learning using the plurality of training data pairs,

the search module including

a neural network configured to estimate a cost of each of a plurality of nodes in an input map,
an extraction operation to extract, from the plurality of nodes in the input map, one or more candidate nodes adjacent to a path node, and
a selection operation to select, based on an estimation result from the neural network, a next path node from the extracted one or more candidate nodes to minimize a sum of the costs for the plurality of nodes,

the search module being configured to find a path from a start node being a first path node to a goal node through the extraction operation and the selection operation being iterated until the goal node is selected as a path node,
the machine learning including training the search module on each of the plurality of training data pairs to find a path fitting the recommended path indicated by the true information in response to receiving an input of the training map as the input map,

in the machine learning, the training the search module including performing, in a phase of forward propagation, the extraction operation and the selection operation, and replacing, in a phase of backpropagation, the extraction operation and the selection operation with differentiable alternative operations and differentiating the differentiable alternative operations to compute approximate gradients corresponding to differentiation calculations for the extraction operation and the selection operation.

**FIG. 1**

FIG. 2

EP 4 191 203 A1

FIG. 3

**FIG. 4**

**FIG. 5**

**FIG. 6**

**FIG. 7**

**FIG. 8**

**FIG. 9**

100B

RB

Control apparatus

Model generation
apparatus

1

2B

5

221B

50

NN

SB2

GB2

Search

51

Extraction operation

223B

Selection operation

52

225B

**FIG. 10**

Start node

Goal node

**FIG. 11A**

Goal node

Start node

**FIG. 11B**

Goal node

Start node

**FIG. 11C**

FIG. 12A

FIG. 12B

FIG. 12C

FIG. 13A

FIG. 13B

FIG. 13C

FIG. 14A

FIG. 14B

FIG. 14C

## INTERNATIONAL SEARCH REPORT

| International application No. |
|---|
| PCT/JP2021/025066 |

**A. CLASSIFICATION OF SUBJECT MATTER**
G01C 21/34(2006.01)i; G08G 1/0968(2006.01)i
FI: G01C21/34; G08G1/0968 B

According to International Patent Classification (IPC) or to both national classification and IPC

**B. FIELDS SEARCHED**

Minimum documentation searched (classification system followed by classification symbols)
G01C21/00-21/36;   G01C23/00-25/00;   G08G1/00-99/00;   G09B23/00-29/14;
G05D1/00-1/12

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-46652 A (KARAKURI INC.) 26 March 2020 (2020-03-26) paragraphs [0013]-[0114], fig. 1-12 | 1-14 |
| A | JP 2001-249021 A (ROBERT BOSCH GMBH) 14 September 2001 (2001-09-14) paragraphs [0021]-[0037], fig. 1-4 | 1-14 |
| A | JP 10-21489 A (HITACHI, LTD.) 23 January 1998 (1998-01-23) paragraphs [0016]-[0048], fig. 1-4 | 1-14 |

☐ Further documents are listed in the continuation of Box C.　　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 September 2021 (10.09.2021) | 21 September 2021 (21.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application no.

PCT/JP2021/025066

| Patent Documents referred in the Report | Publication Date | Patent Family | Publication Date |
|---|---|---|---|
| JP 2020-46652 A | 26 Mar. 2020 | (Family: none) | |
| JP 2001-249021 A | 14 Sep. 2001 | EP 1122517 A2 paragraphs [0020]-[0036], fig. 1-4 DE 10004163 A1 | |
| JP 10-21489 A | 23 Jan. 1998 | (Family: none) | |

Form PCT/ISA/210 (patent family annex) (January 2015)